# EUROPEAN PATENT APPLICATION

(11) **EP 4 447 572 A1**
(43) Date of publication of application: **16.10.2024**
(21) Application number: 24169541.0
(22) Date of filing: 10.04.2024
(51) Int. Cl.: H04W 60/06

(54) **METHODS AND SYSTEMS FOR HANDLING COLLISION OF SIGNALING MESSAGES IN A WIRELESS COMMUNICATION SYSTEM**

(30) Priority: 11.04.2023 IN 202341026734; 05.04.2024 IN 202341026734
(71) Applicant: Samsung Electronics Co., Ltd., Suwon-si, Gyeonggi-do 16677 (KR)
(72) Inventor: GANNIMITTA, Chaithanya Sai, Bengaluru (IN); GANIG, Chetan Ramesh, Bengaluru (IN); DANDRA, Prasad Basavaraj, Bengaluru (IN); COMARAVELOU, Sivasankar, Bengaluru (IN); HASHMI, Danish Ehsan, Bengaluru (IN); KUMAR, Lalith, Bengaluru (IN); SINHA, Utsav, Bengaluru (IN)
(74) Representative: Marks & Clerk LLP

(57) **Abstract**

A method for handling collision of signaling messages between a user equipment (UE) and a network entity is disclosed. The method includes transmitting a first signaling message comprising a first access type and a second signaling message comprising a second access type different from the first access type. The UE is registered on a network for the first access type and the second access type. The method also includes determining that the first access type and the second access type correspond to different access types. The method further includes processing the first signaling message and the second signaling message based on the determination by processing of the first signaling message and the second signaling message in parallel or re-triggering one or more of the first signaling message or the second signaling message.

## Description

### TECHNICAL FIELD

The present disclosure generally relates to wireless communication networks, and more particularly to methods and systems for handling collisions of signalling messages, having access type information, between a user equipment (UE) and a network entity.

### BACKGROUND

The evolving landscape of wireless communication systems has led to a significant increase in the demand for efficient handling of signaling messages to ensure seamless and reliable communication between devices. As the demand for wireless connectivity continues to surge, particularly with the proliferation of IoT (Internet of Things) devices and the advent of 5G technology, the challenges associated with managing signaling messages have become increasingly complex.

Signaling messages play a crucial role in facilitating various functions within wireless communication systems, including device authentication, network registration, resource allocation, and handover management. However, in certain scenarios, the occurrence of message collisions poses a significant impediment to the smooth operation of these systems. Message collisions can lead to packet loss, increased latency, degraded quality of service, and ultimately, disruptions in communication. Therefore, there is a need in the art for systems and methods that can prevent collision of signaling messages to provide seamless communication and quality of service.

### SUMMARY

This summary is provided to introduce a selection of concepts in a simplified format that are further described in the detailed description. This summary is not intended to identify key or essential concepts, nor is it intended to determine the scope of the inventive concepts.

The present disclosure describes systems and methods for preventing collisions of multi-access procedures in a wireless communication system. In some cases, embodiments of the present disclosure include transmission of a signaling message having different access types between the UE and the network entity and identification of the access types associated with each of the UE and the network. One or more embodiments of the present disclosure include storage of access type information of a user equipment (UE) and a network entity which enables identification of the different access types. In some cases, the UE and the network entity are synchronized (e.g., in terms of connectivity) resulting in processing the signaling request parallelly or via re-triggering which enables improved user experiences.

According to embodiments of the present disclosure, a method for handling collisions of signaling messages between a UE and a network entity is disclosed. The method includes transmitting a first signaling message comprising a first access type and receiving a second signaling message comprising a second access type different from the first access type. The UE is registered on a network for the first access type and the second access type. The method includes determining that the first access type and the second access type correspond to different access types. The method further includes processing the first signaling message and the second signaling message based on the determination by processing of the first signaling message and the second signaling message in parallel or re-triggering the first signaling message or the second signaling message.

According to embodiments of the present disclosure, a system for handling collisions of signaling messages is disclosed. The system includes the UE and the network entity of a network in communication with the UE. The system is configured to transmit a first signaling message and a second signaling message. The first signaling message is associated with a first access type and the second signaling message is associated with a second access type. The UE is registered on the network for the first access type and the second access type. The system is configured to determine that the first access type is different from the second access type. The system is further configured to process the first signaling message and the second signaling message based on the determination by processing the first signaling message and the second signaling message in parallel or re-triggering the first signaling message or the second signaling message.

At least some of the above and other features of the invention are set out in the claims.

To further clarify the advantages and features of the inventive concepts, a more particular description will be rendered by reference to specific examples thereof, which are illustrated in the appended drawings. It is appreciated that these drawings depict only typical examples and are therefore not to be considered as limiting the scope of the inventive concepts. The inventive concepts will be described and explained with additional specificity and detail with the accompanying drawings.

### BRIEF DESCRIPTION OF THE DRAWINGS

These and other features, aspects, and advantages of the inventive concepts will become better understood when the following detailed description is read with reference to the accompanying drawings in which like characters represent like parts throughout the drawings, wherein:
Figure 1 illustrates a sequence of operations depicting a first problem in signaling handling in a wireless communication system with multi-access support, according to a conventional technique;
Figure 2 illustrates a sequence of operations depicting a second problem in signaling handling in a wireless communication system with multi-access support, according to a conventional technique;
Figure 3 illustrates a sequence of operations depicting a third problem in signaling handling in a wireless communication system with multi-access support, according to a conventional technique;
Figure 4 illustrates a sequence of operations depicting a fourth problem in signaling handling in a wireless communication system with multi-access support, according to a conventional technique;
Figure 5 illustrates a sequence of operations depicting a method for solving the first problem in Fig. 1, according to an embodiment of the present disclosure;
Figure 6 illustrates a sequence of operations depicting a method for solving the second problem in Fig. 2, according to an embodiment of the present disclosure;
Figure 7 illustrates a sequence of operations depicting a method for solving the third problem in Fig. 3, according to an embodiment of the present disclosure;
Figure 8 illustrates a sequence of operations depicting a method for solving the fourth problem in Fig. 4, according to an embodiment of the present disclosure;
Figure 9 illustrates a sequence of operations depicting a problem in collision of a UE-initiated de-registration procedure during switch off condition and a network initiated deregistration procedure, according to a conventional technique;
Figure 10 illustrates a sequence of operations for handling the problem in collisions of the UE-initiated de-registration procedure during the switch off condition and the network initiated de-registration procedure, according to an embodiment of the present disclosure;
Figure 11 illustrates a sequence of operations depicting a problem in collision of a UE-initiated de-registration procedure during non-switch off condition and a network initiated de-registration procedure, according to a conventional technique;
Figure 12 illustrates a sequence of operations for handling the problem in collision of the UE-initiated de-registration procedure during the non-switch off condition and the network initiated de-registration procedure, according to an embodiment of the present disclosure;
Figure 13 illustrates a sequence of operations depicting a problem in collision of a UE-initiated de-registration procedure and an emergency Packet Data Unit (PDU) establishment procedure, according to a conventional technique;
Figure 14 illustrates a sequence of operations for handling the problem in collisions of the UE-initiated de-registration procedure and the emergency PDU establishment procedure, according to an embodiment of the present disclosure;
Figure 15 illustrates a sequence of operations depicting a first problem in collision of a UE-initiated 5GSM procedure and a network initiated 5GSM procedure, according to a conventional technique;
Figure 16 illustrates a sequence of operations for handling the first problem in collisions of the UE-initiated 5GSM procedure and the network initiated 5GSM procedure, according to an embodiment of the present disclosure;
Figure 17 illustrates a sequence of operations depicting a second problem in collision of a UE-initiated 5GSM procedure and a network initiated 5GSM procedure, according to a conventional technique;
Figure 18 illustrates a sequence of operations for handling the second problem in collisions of the UE-initiated 5GSM procedure and the network initiated 5GSM procedure, according to another embodiment of the present disclosure;
Figure 19 illustrates a sequence of operations depicting a problem in collision of a UE-initiated de-registration procedure and a network initiated 5GSM procedure, according to a conventional technique;
Figure 20 illustrates a sequence of operations for handling the problem in collisions of the UE-initiated de-registration procedure and the network initiated 5GSM procedure, according to an embodiment of the present disclosure;
Figure 21 illustrates a sequence of operations depicting a problem in collision of a UE-initiated de-registration procedure and a network initiated Configuration Update Command (CUC) procedure, according to a conventional technique;
Figure 22 illustrates a sequence of operations for handling the problem in collisions of the UE-initiated de-registration procedure and the network initiated CUC procedure, according to an embodiment of the present disclosure;
Figure 23 illustrates an example process flow method for handling collisions of signaling messages, according to embodiments of the present disclosure.
Figure 24 illustrates an example diagram of a network, according to embodiments of the present disclosure; and
Figure 25 is a diagram illustrating the configuration of a UE in the wireless communication system, according to embodiments of the present disclosure.

Further, skilled artisans will appreciate that elements in the drawings are illustrated for simplicity and may not necessarily have been drawn to scale. The flow charts illustrate the method in terms of operations involved to help improve understanding of aspects of the inventive concepts. Furthermore, in terms of the construction of the device, one or more components of the device may have been represented in the drawings by conventional symbols, and the drawings may show only those specific details that are pertinent to understanding embodiments of the inventive concepts so as not to obscure the drawings with details that will be readily apparent to those of ordinary skill in the art having the benefit of the description herein.

### DETAILED DESCRIPTION

5th Generation systems (5GSs) for wireless communication support different Third Generation Partnership Project (3GPP) access technologies, including New Radio (NR) and Evolved Universal Terrestrial Radio Access Network (E-UTRAN), and non-3GPP access technologies. In some cases, the 5G Core Network (5GCN) supports the connectivity of a User Equipment (UE) via 3GPP and/or non-3GPP access networks. Non-3GPPP Inter-Working Function (N3IWF) in a 5G network facilitates connection between the UE and the 5GCN over the non-3GPP access network with support for IPsec (i.e., internet protocol security for securing communications based on encryption of an IP packet of a communication session) between the UE and the N3IWF. Thus, the 5GCN enables interoperability among various access technologies. Particularly, the 5G system selects the most appropriate 3GPP or non-3GPP access technology for a service for optimization and resource efficiency. Accordingly, 5G systems may provide for multiple access technologies to be used simultaneously for one or more services active on the UE.

Non-Access Stratum (NAS) signaling may be common to different accesses. In some cases, NAS signaling provides for controlling one access from the other and simultaneous use of both accesses. However, when both the 3GPP and the non-3GPP access technologies are used simultaneously, there may be a collision of UE initiated and Network (NW) initiated NAS signaling procedures associated with different accesses even when the UE is registered with the NW. As a result, the UE and the NW may be out of sync and users may experience no data and no service. Additionally, the user may experience delay in establishment of emergency calls, call drop, out-of-sync feature configuration, no service or delay in service due to the collisions in NAS signaling procedures.

Accordingly, the present disclosure describes systems and methods for preventing collisions of multi-access procedures in a wireless communication system. In some cases, embodiments of the present disclosure include transmission of a signaling message having different access types between the UE and the network entity and identification of the access types associated with each of the UE and the network. One or more embodiments of the present disclosure include storage of access type information of a user equipment (UE) and a network entity which enables identification of the different access types. In some cases, the UE and the network entity (NE) are synchronized (e.g., in terms of connectivity) resulting in processing the signaling request parallelly or via re-triggering which enables improved user experiences. The term "parallelly" used herein may refer to performing actions in parallel or simultaneously.

Embodiments of the present disclosure include transmission of signaling messages comprising different access types. In some cases, a UE may be registered for a first access type and a second access type associated with a first signaling message and a second signaling message, respectively. For example, the first access type may be a 3GPP access type and the second access type may be a non-3GPP access type. In some cases, each of the UE and the NE may transmit the first and second signaling messages to each other.

In some cases, the UE and the NE may subsequently detect the difference in access types (e.g., 3GPP access type and a non-3GPP access type) received in each of the first and second signaling messages. Accordingly, each of the UE and the NE may process the signaling messages which refers to parallelly processing of the signaling messages and/ or re-triggering one or more of the signaling messages.

Embodiments of the present disclosure include a method for handling collision of signaling messages between the UE and network entity. In some cases, the signaling messages include access type information. According to an embodiment, a first signaling message comprising a first access type is transmitted from the UE to the network entity. Additionally, a second signaling message comprising a second access type different from the first access type is received from the network entity at the UE. In some cases, the UE determines that the first access type and the second access type are based on different access types. Then, the UE processes the first signaling message and the second signaling message based on the determination of the access types by processing each of the signaling messages in parallel or by re-triggering the signaling messages.

According to an embodiment, a method for handling collision of signaling messages between the UE and network entity is provided. One or more embodiments further include transmitting a first signaling message comprising a first access type and transmitting a second signaling message comprising a second access type different from the first access type. In some cases, the UE is registered on a network for the first access type and the second access type. According to some embodiments, the UE determines that the first access type and the second access type correspond to different access types and then processes each of the signaling messages based on the determination by processing both the signaling messages in parallel or by re-triggering each of the signaling messages.

By simultaneously processing or re-triggering each of the signaling messages, embodiments of the present disclosure are able to prevent any delay in services requested by the user, enhancing user experience. Additionally, embodiments are able to effectively and efficiently establish emergency sessions without delays. In some cases, the methods in the present disclosure are able to prevent aborting any procedures (e.g., UE initiated deregistration procedure or configuration update command procedure) and independently handle each of the procedures.

It should be understood at the outset that although illustrative implementations of embodiments of the present disclosure are illustrated below, the inventive concepts may be implemented using any number of techniques, whether currently known or in existence. The present disclosure should in no way be limited to the illustrative implementations, drawings, and techniques illustrated below, including the example design and implementation illustrated and described herein, but may be modified within the scope of the appended claims along with their full scope of equivalents.

The term "some" as used herein is defined as "one, or more than one, or all." Accordingly, the terms "one," "more than one," "more than one, but not all" or "all" would all fall under the definition of "some." The term "embodiments" may refer to one embodiment or to several embodiments or to all embodiments.

The terminology and structure employed herein is for describing, teaching, and illuminating embodiments and their specific features and elements and does not limit, restrict, or reduce the scope of the claims or their equivalents.

More specifically, any terms used herein such as but not limited to "includes," "comprises," "has," "consists," and grammatical variants thereof do NOT specify an exact limitation or restriction and certainly do NOT exclude the possible addition of one or more features or elements, unless otherwise stated, and furthermore must NOT be taken to exclude the possible removal of one or more of the listed features and elements, unless otherwise stated with the limiting language "MUST comprise" or "NEEDS TO include."

Whether or not a certain feature or element was limited to being used only once, either way, it may still be referred to as "one or more features" or "one or more elements" or "at least one feature" or "at least one element."

Unless otherwise defined, all terms, and especially any technical and/or scientific terms, used herein may be taken to have the same meaning as, or a similar meaning to, that commonly understood by one having ordinary skill in the art.

The present disclosure describes systems and methods for preventing collisions of multi-access procedures in a wireless communication system. Embodiments of the present disclosure will be described below in detail with reference to the accompanying drawings.

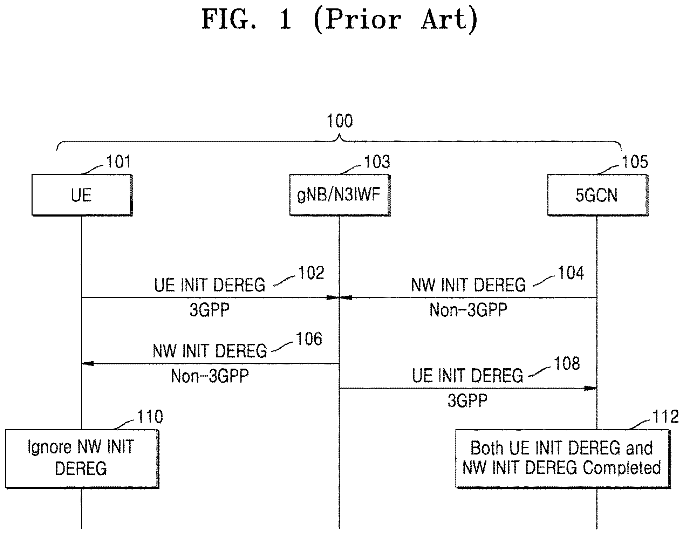

Figure 1 illustrates a sequence of operations depicting a problem in signal handling in a wireless communication system 100 with multi-access support, according to a conventional technique. The wireless communication system 100 (also referred to as system 100) may include a User Equipment (UE) 101, a base station (gNodeB) (gNB)/Non-3GPPP Inter-Working Function (N3IWF) 103, and a 5G Core Network (5GCN) 105 (interchangeably referred to as the network (NW) 105). The UE 101 is registered with the 5GCN 105. The 5GCN 105 may include entities such as, but not limited to, Access and Mobility Management Function (AMF), Session Management Function (SMF), and User Plane Function (UPF).

In some cases, the AMF may be configured to perform user authentication, authorization, and mobility management. In particular, the AMF may ensure that the UE 101 stays connected to the 5GCN 105 securely and efficiently, e.g., even when moving between different network nodes. The SMF is configured to establish, modify, and terminate data sessions between the UE 101 and the 5GCN 105. The UPF is responsible for actual data transfer in a user plane.

The UE 101 may correspond to any suitable communication device such as, but not limited to, a smartphone, a tablet, a laptop, and so forth. The network 105 may correspond to a wireless network configured to support multi-access procedures. For instance, the network 105 may support Third Generation Partnership Project (3GPP) access technologies, including New Radio (NR) and Evolved Universal Terrestrial Radio Access Network (E-UTRAN), as well as non-3GPP access technologies such as, Wi-Fi, Ethernet, etc. The N3IWF 103 may enable an interworking between the UE 101 and the network 105 to support non-3GPP access. In an embodiment, the UE 101 and the network 105 may select one of the 3GPP access or the non-3GPP access to have optimized and efficient resource utilization. The multi-access support of the UE 101 and the network 105 may prevent data congestion by traffic offloading along with providing improved coverage and connectivity in high density traffic environments.

In some cases, an access type refers to the method or protocol used by a user device (UE) to access the network and communicate with other devices or network elements. The access type determines how the UE establishes a connection with the network, transmits and receives data, and interacts with network resources. For example, access types in a wireless communication system include (but are not limited to) Frequency Division Multiple Access (FDMA), Time Division Multiple Access (TDMA), Orthogonal Frequency Division Multiple Access (OFDMA), etc.

As used herein, the 3GPP (3rd Generation Partnership Project) and non-3GPP access are terms used to categorize different types of access networks within the realm of mobile telecommunications. For example, 3GPP access networks are those that adhere to the standards and specifications developed by the 3rd Generation Partnership Project (3GPP) and non-3GPP access networks encompass wireless technologies that do not adhere to the standards and specifications developed by 3GPP.

Particularly, Fig. 1 illustrates a scenario corresponding to the problem of performing signalling handling by the network 105 having multi-access support. The UE 101 is initially connected with both the 3GPP access and the non-3GPP access. At operation 102, the UE 101 initiates a deregistration procedure for the 3GPP access by transmitting a UE-initiated deregistration request to the gNB/N3IWF 103. For instance, when a user of the UE 101 is switching OFF radio of the UE 101 or activating a non-service mode or turning on flight mode, the UE 101 may generate the UE-initiated deregistration request. The UE-initiated deregistration request may include an Access Type Identifier (ID) field indicating type of access (for example, 3GPP) associated with the UE-initiated deregistration request.

Simultaneously (i.e., at the same time as operation 102), the network 105 initiates a deregistration procedure for the non-3GPP access by transmitting a network-initiated deregistration request to the gNB/N3IWF 103 at operation 104. The network 105 may generate the network-initiated deregistration request due to factors such as, but not limited to, subscription issues, deployment issues, configuration issues, load balancing, and the like. The network-initiated deregistration request may also include an access type ID field indicating type of access (for example, non-3GPP) associated with the network-initiated deregistration request. Furthermore, the simultaneous transmission of the UE-initiated deregistration request and the network-initiated deregistration request may lead to collision of the UE-initiated deregistration procedure and the network initiated deregistration procedure.

The gNB/N3IWF 103 receives both requests corresponding to the deregistration procedure initiated by the UE 101 and the network 105. At operation 106, the gNB/N3IWF 103 transmits the network-initiated deregistration request to the UE 101. At operation 108, the gNB/N3IWF 103 transmits the UE-initiated deregistration request to the network 105. In some cases, at operation 110, the UE 101 ignores the network-initiated deregistration request, while at operation 112, the network 105 considers both the UE initiated deregistration procedure and the network-initiated deregistration procedure being completed, in accordance with the conventional approach. In some cases, the UE 101 may consider being connected to non-3GPP access, whereas the network 105 will consider no access being connected. That is, for example, the network 105 may not provide access to the UE 101 despite the UE 101 being in a connected state. In some cases, when the UE 101 tries to get services on the non-3GPP, the network 105 may not respond and the UE 101 may fail to get any service on the non-3GPP access despite being registered. The lack of service on the non-3GPP access may last for a longer duration as there is a possibility of major reject caused as part of subsequent Non Access Stratum (NAS) procedures (e.g., service request, etc.) leading to poor user experience.

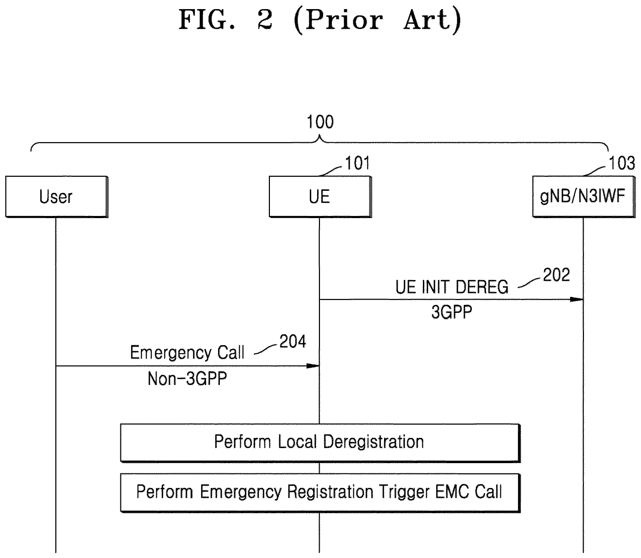

Figure 2 illustrates a sequence of operations depicting a second problem in signaling handling in the wireless communication system 100 with multi-access support, according to a conventional technique. The UE 101 is initially connected with both the 3GPP access and the non-3GPP access. At operation 202, the UE 101 initiates a deregistration procedure for the 3GPP access. While the deregistration procedure is in process, at operation 204, the user initiates an emergency call service request via the non-3GPP access. Therefore, there occurs a collision of the deregistration procedure and the emergency call service request at the UE 101. In particular, the NAS layer at the UE 101 receives the deregistration request and service establishment request for the emergency call service. Therefore, the UE 101 is required to establish a session to support the emergency call request on priority. However, in accordance with the conventional technique, the UE 101 may either wait for the completion of the deregistration procedure or perform local deregistration. After performing the deregistration, the UE 101 may then perform the registration procedure for the emergency call service and trigger the emergency call leading to delay in establishing emergency services for the user.

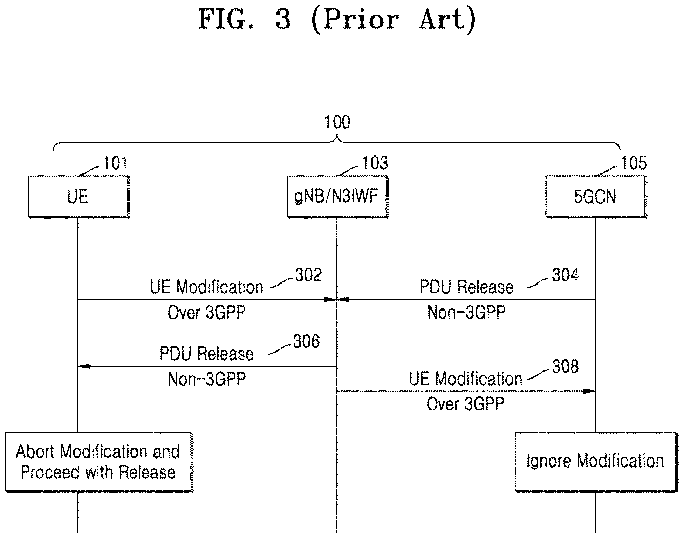

Figure 3 illustrates a sequence of operations depicting a third problem in signaling handling in the wireless communication system 100 with multi-access support, according to a conventional technique. The UE 101 is initially connected with both the 3GPP access and the non-3GPP access. At operation 302, the UE 101 initiates a Packet Data Unit (PDU) modification procedure over the 3GPP access via a user-initiated modification request. The user may generate the PDU modification procedure to change at least one of Quality of Service (QoS), a priority change, etc. Specifically, when the PDU session is established between the UE 101 and the network 105, the PDU session may be modified by the UE 101 or the network 105 based on the requirements.

At operation 304, the network 105 simultaneously initiates a PDU session release procedure for the same PDU session over the non-3GPP access via a network initiated PDU release command. Thus, a collision occurs between the network-initiated PDU session release procedure and the UE-initiated PDU modification procedure. At operation 306, the network initiated PDU release request is transmitted to the UE 101 by the gNB/N3IWF 103, and at operation 308, the user-initiated PDU modification request is transmitted to the network 105 by the gNB/N3IWF 103. However, as per the conventional technique, the UE 101 may abort the modification procedure and proceed with the release procedure as requested by the network 105, whereas the network 105 may ignore the modification leading to issues such as, but not limited to, call-drop, uneven charging, QoS mismatch.

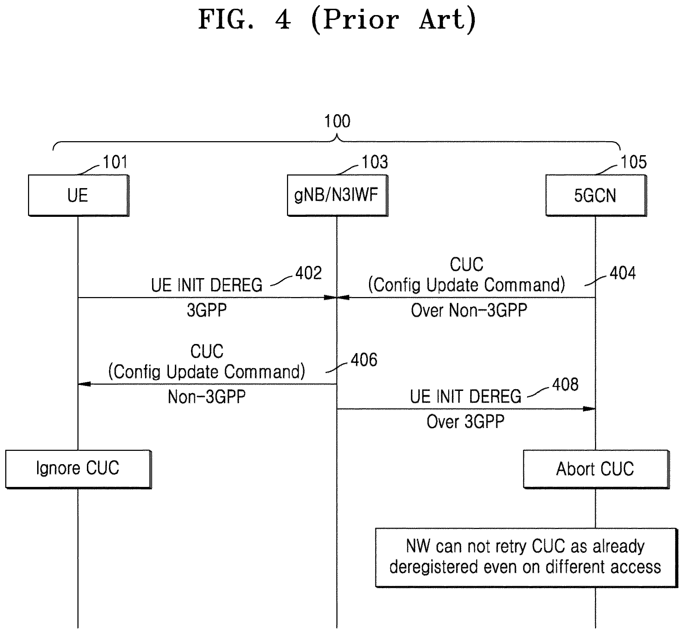

Figure 4 illustrates a sequence of operations depicting a fourth problem in signaling handling in the wireless communication system 100 with multi-access support, according to a conventional technique. At operation 402, the UE 101 initiates a deregistration procedure over the 3GPP access by transmitting a user-initiated deregistration request to the gNB/N3IWF 103. Simultaneously, at operation 404, the network 105 initiates a configuration update procedure over non-3GPP access by transmitting a network-initiated configuration update command to the gNB/N3IWF 103.

In some cases, the scenario illustrated in Fig. 4 may be applicable to other network-initiated 5GMobility Management (5GMM) common procedures as categorized for the NAS layer in the 3GPP access. More particularly, according to the illustrated scenario, a collision occurs between the user-initiated deregistration procedure and the network-initiated configuration procedure. At operation 406, the gNB/N3IWF 103 transmits the network-initiated configuration update command to the UE 101. At operation 408, the gNB/N3IWF 103 transmits the UE-initiated deregistration request to the network 105. However, the UE 101 initiated the deregistration procedure and the network 105 received the UE-initiated deregistration request, and the network 105 initiated the configuration update command and the UE 101 received the network-initiated configuration update command, both the UE 101 and the network 105 may ignore/abort the configuration update procedure without considering the associated access type. Moreover, the network 105 may not retry CUC as the network 105 has considered the UE-initiated deregistration request. Therefore, even though the deregistration request corresponds to a different access type, the network 105 may not retry the CUC procedure leading to missing slice updates, ignoring re-registration, ignoring SoR configurations, and thereby impacting user services.

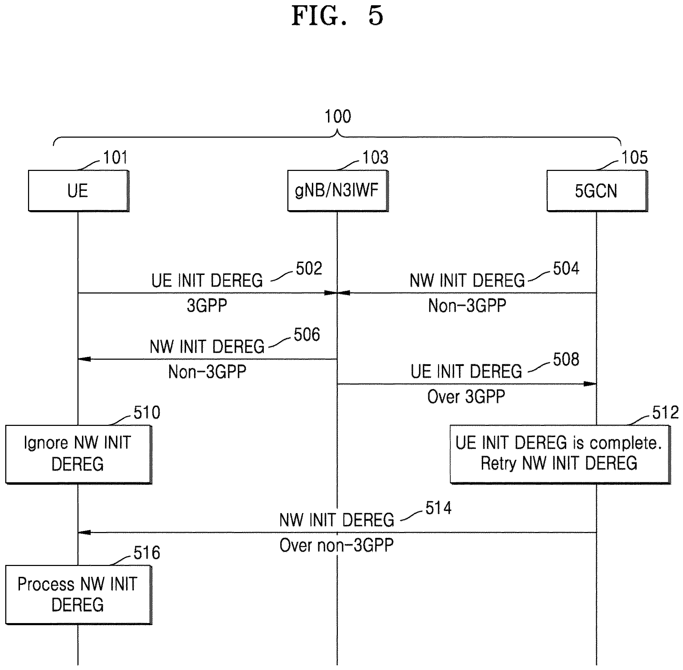

Figure 5 illustrates a sequence of operations for solving the first problem in Fig. 1, according to an embodiment of the present disclosure. According to the method illustrated in Fig. 5, when there is a collision between two 5GMM procedures corresponding to two different access types, each of the said procedures are either performed simultaneously/parallelly (e.g. in parallel) or sequentially (i.e., once the first procedure is complete, the second procedure is reinitiated). More specifically, Fig. 5 corresponds to the method of handling signaling during the collision of 5GMM specific procedures i.e., deregistration procedures.

According to an embodiment, operations 502-504 are similar to operations 102-104 (as described in FIG. 1), which corresponds to the collision of the UE-initiated deregistration procedure and the network initiated deregistration procedure. Further, the operations 506-510 are similar to operations 106-110 (as described in FIG. 1), where the UE-initiated deregistration request is considered by the network 105 and the network-initiated deregistration request is ignored by the UE 101. Therefore, repeated descriptions are omitted herein for brevity.

At operation 512, the network 105 considers the UE-initiated deregistration procedure for the 3GPP access to be complete and retries the network-initiated deregistration procedure for the non-3GPP access (i.e., in case still required by the network 105). At operation 514, the network transmits the network-initiated deregistration request for the non-3GPP access to the UE 101. At operation 516, the UE 101 processes the received network-initiated deregistration request for the non-3GPP access. Thus, both the UE 101 and the network 105 are aware of the completed deregistration procedures and are in sync in terms of connectivity which may prevent failing service requests and enhancing the user experience. According to an illustrative embodiment, the UE-initiated deregistration procedure and the network initiated deregistration procedure may be initiated with requests including one access type Information Element (IE) indicating a type of access to which the request corresponds to. The UE 101 and network 105 may consider said access type IEs to process the received requests.

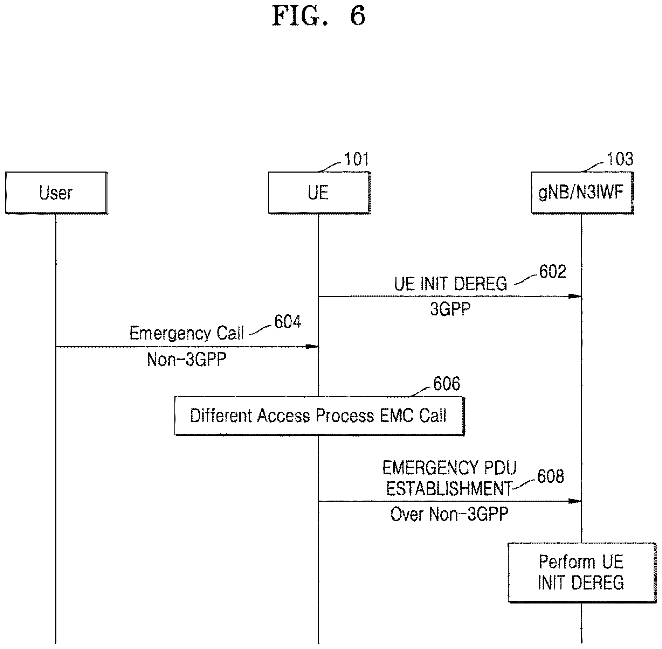

Figure 6 illustrates a sequence of operations for solving the second problem in Fig. 2, according to an embodiment of the present disclosure. Operations 602-604 are similar to operations 202-204 (as described in FIG. 2), where there is a collision of the user-initiated deregistration procedure for the 3GPP access and the emergency call service request over the non-3GPP access at the UE 101. In an embodiment, the user-initiated deregistration procedure may be during non-switch off condition, when the UE 101 only requested for the deregistration procedure to save resources or any other requirements. However, in the scenario illustrated in Fig. 6, the UE 101 may consider the access type corresponding to each request i.e., one access type corresponding to the user-initiated deregistration procedure and the other access type corresponding to the emergency call service request. Upon identifying that the emergency call service request corresponds to a different access type than the user-initiated deregistration procedure, at operation 606, the UE 101 may process the emergency call service request to establish emergency call services. Specifically, at operation 608, the UE 101 may establish an emergency PDU over the non-3GPP access to perform the emergency call services. The UE 101 may simultaneously perform the user-initiated deregistration procedure for the 3GPP access or wait for the emergency call service to complete and retry the user-initiated deregistration procedure for the 3GPP access which may prevent any delay to the emergency services requested by the user.

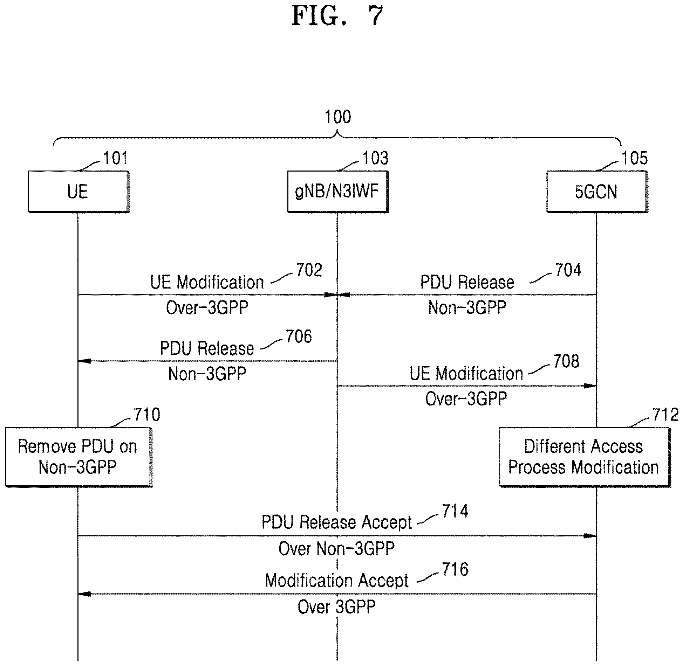

Figure 7 illustrates a sequence of operations for solving the third problem in Fig. 3, according to an embodiment of the present disclosure. Operations 702-708 are similar to operations 302-308 (as described with reference to FIG. 3), that correspond to the collision between the network-initiated PDU session release procedure and the UE-initiated PDU modification procedure. Repeated descriptions are omitted herein for brevity.

At operation 710, the UE 101 may only release the PDU session on the non-3GPP access without aborting the PDU modification procedure over the 3GPP access (e.g., instead of aborting modification of the PDU session and releasing the PDU session by the UE 101). Further, at operation 712, the network 105 may identify that the PDU modification procedure corresponds to a different access type than the network initiated PDU release procedure. Therefore, the network 105 may process the UE initiated PDU modification procedure over the 3GPP access. Next, at operation 714, the UE 101 may transmit a message to the network 105 that indicates that the UE 101 has accepted the network initiated PDU release request over the non-3GPP access. At operation 716, the network 105 transmits a message to the UE 101 that indicates the network 105 has accepted the UE initiated PDU modification request over the 3GPP access. Accordingly, the intended service configuration is provided to the user which prevents service failure.

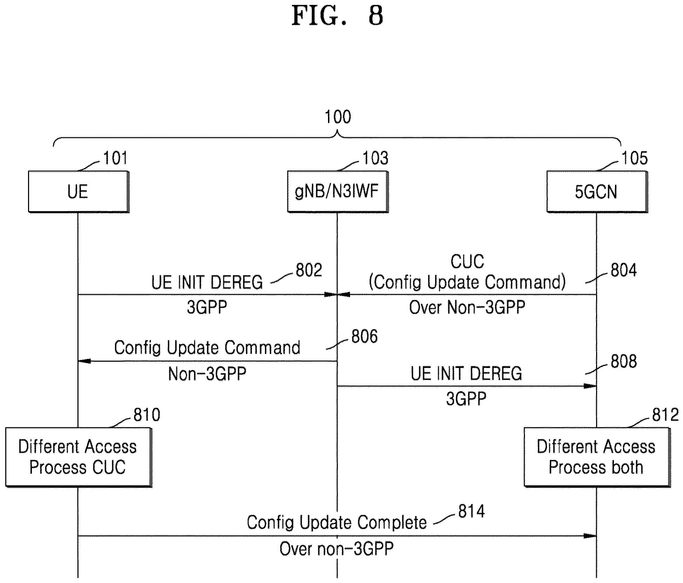

Figure 8 illustrates a sequence of operations for solving the fourth problem in Fig. 4, according to an embodiment of the present disclosure. Operations 802-808 are similar to operations 402-408 (described with reference to FIG. 4), that correspond to the collision between the user-initiated deregistration procedure over the 3GPP access and the network-initiated 5GMM common procedure, i.e., Configuration Update Command (CUC) procedure, over the non-3GPP access. At operations 810 and 812, the UE 101 and the network 105 identify that each of the user-initiated deregistration procedure and the CUC procedure correspond to different access types (i.e., instead of ignoring the CUC procedure at the UE 101 and aborting the CUC procedure at the network 105). Therefore, the UE 101 and the network 105 process both the procedures in parallel. Next, at operation 814, the UE 101 may transmit a message to the network 105 to indicate that the CUC procedure over the non-3GPP access is complete which may ensure effective service establishment to the UE 101 by the network 105.

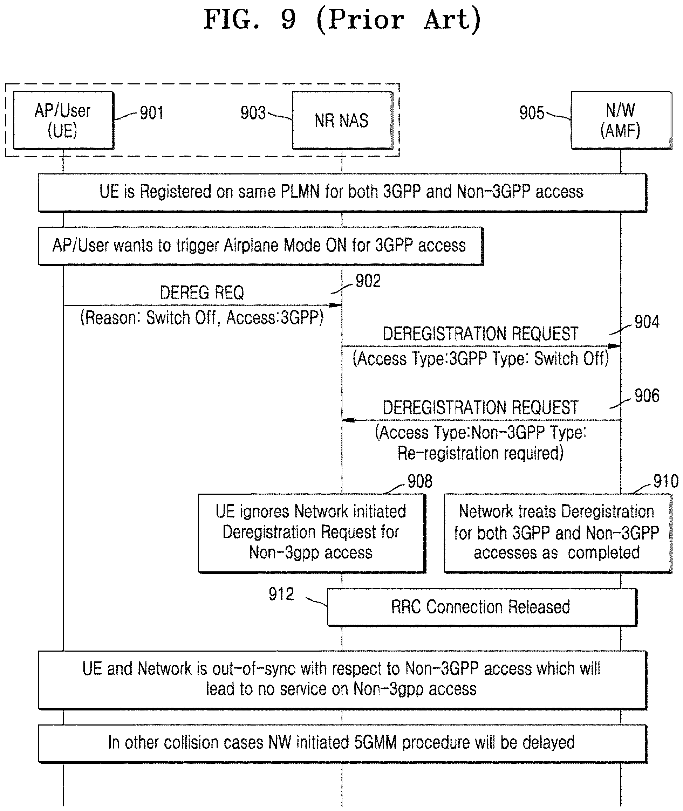

Figure 9 illustrates a sequence of operations depicting a problem of collision of UE-initiated de-registration procedure during switch-off condition and network initiated deregistration procedure, according to a conventional technique. In some cases, the sequence of operations corresponds to a communication between an AP/User (UE 901) and a network 905 and/or a network entity AMF 905 via New Radio NAS (NR NAS) layer 903 (hereinafter referred to as NR NAS 903). In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 9. In one embodiment, the AMF 905 may be configured to manage mobility of the UE 901 and handle access authentication. The UE 901 may correspond to a user of the network and may also be referred to as Application Processor (AP) that handles the user request.

Initially, the UE 901 is powered on. Further, the sequence of operation illustrated in Fig. 9, when the UE 901 may be registered on the same Public Land Mobile Network (PLMN) for both the 3GPP access and a non-3GPP access, the user has triggered an Airplane Mode ON (i.e., no-service mode) for the 3GPP access. At operation 902, the UE 901 may trigger DEREGISTRATION REQUEST with AccessType:3GPP and reason as Switch Off and transmits the DEREGISTRATION REQUEST to NR NAS 903. At operation 904, the NR NAS 903 may transmit the user-triggered DEREGISTRATION REQUEST to the AMF 905. Simultaneously, the network 905 may initiate a DEREGISTRATION REQUEST with AccessType:Non-3GPP and reason as "Re-registration required". This leads to the collision of the user-initiated deregistration procedure and the network-initiated deregistration procedure. Accordingly, at operation 906, the AMF 905 may transmit the network-triggered DEREGISTRATION REQUEST to the NR NAS 903. However, at operation 908, the UE 901 may ignore the network initiated DEREGISTRATION REQUEST for Non-3GPP access. At operation 910, the network 905 may treat deregistration procedure for both the 3GPP and the non-3GPP accesses as completed.

The scenario illustrated in Fig. 9 may be equally applicable when the "AccessType " indicated in the deregistration requests at operations 902 and 906 are interchanged, i.e., when the UE 901 initiates DEREGISTRATION REQUEST with AccessType: Non-3GPP and the network initiates DEREGISTRATION REQUEST with AccessType:3GPP. Moreover, the collision may also occur when the UE initiated deregistration procedure encounters network initiated 5GMM signaling such as 5GMM common procedures (e.g., identity, security mode command, generic UE configuration update, and NAS TRANSPORT procedures etc.), 5GMM specific procedures (e.g., Registration Request, authentication, and key agreement procedure for 5G ProSe UE-to-network relay, etc.), and 5GMM connection management procedures (e.g., service request, notification procedure etc.).

Additionally or alternatively, the UE 901 may ignore and the network may abort the network initiated procedure (as shown in operations 908 and 910). For example, at operation 908, Network initiated 5GMM signaling procedure is ignored at both UE and Network side. As a result, the UE 901 and the network may be out of sync. At operation 912, the network may release the Radio Resource Control (RRC) connection with the UE 901. Additionally, as the re-registration for the non-3GPP access is not performed, the UE 901 may not get any services over the non-3GPP access. Furthermore, in some collision cases, the network initiated 5GMM procedure is delayed.

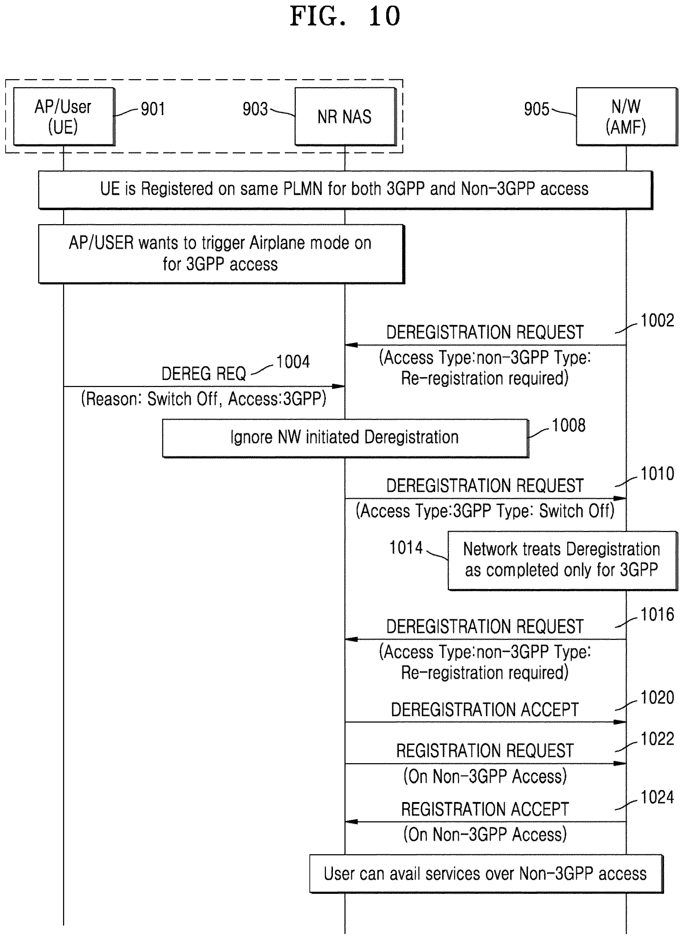

Figure 10 illustrates a sequence of operations to handle the UE-initiated deregistration procedure and the network initiated de-registration procedure, according to an embodiment of the present disclosure.

In some cases, the sequence of operation corresponds to a communication between the AP/User (UE 901) and the network 905 (e.g., a 5G network AMF 905) via the NR NAS 903. In an embodiment, the AP/User (UE 901) and the NR NAS layer 903 may correspond to the UE 101 (described with reference to FIG. 1). Further, the network entity 905 may correspond to the 5GCN 105 (described with reference to FIG. 1). The terms "network 905", "network entity 905", and/or "AMF 905" may be used interchangeably throughout the description of Fig. 10.

Initially, the UE 901 is powered on. Further, the UE 901 may be registered on the same Public Land Mobile Network (PLMN) for both the 3GPP access and the non-3GPP access, and the user has triggered Airplane Mode ON (i.e., no-service mode) for the 3GPP access. However, at operation 1002, the network has initiated the deregistration procedure for the non-3GPP access. Therefore, the AMF 905 transmits the DEREGISTRATION REQUEST with AccessType: non-3GPP and reason/type as re-registration required to the NR NAS 903. At operation 1004, the UE 901, in response to user triggered Airplane Mode ON, may transmit the DEREGISTRATION REQUEST with AccessType: 3GPP and reason as Switch off to the NR NAS 903. In an embodiment, the UE 901 may store access type information for which the DEREGISTRATION REQUEST is triggered. Such access type information may include details of multiple access type values. However, as the NR NAS 903 has already processed the UE initiated DEREGISTRATION REQUEST, at operation 1008, the NR NAS 903 may ignore the network initiated DEREGISTRATION REQUEST, i.e., the UE 901 may ignore DEREGISTRATION REQUEST from the network. Next, at operation 1010, the NR NAS 903 may transmit the UE initiated DEREGISTRATION REQUEST to the AMF 905.

In response to the received UE initiated DEREGISTRATION REQUEST, at operation 1014, the network may only treat deregistration procedure for 3GPP access to be completed and re-initiate deregistration procedure for the non-3GPP access (i.e., if still required). In particular, as the UE initiated DEREGISTRATION REQUEST includes access type information, the network may identify that the UE initiated DEREGISTRATION REQUEST and the network initiated DEREGISTRATION REQUEST are not the same. Accordingly, at operation 1016, the AMF 905 may again transmit the DEREGISTRATION REQUEST for the non-3GPP access to the NR NAS 903. The NR NAS 903 may now accept the DEREGISTRATION REQUEST for the non-3GPP access, and at operation 1020, the NR NAS 903 may transmit the DEREGISTRATION ACCEPT message to the AMF 905. Thereafter, at operation 1022, the NR NAS 903 may request registration for the non-3GPP access by transmitting a REGISTRATION REQUEST message for the non-3GPP access to the AMF 905. Upon accepting the registration request for the non-3GPP access, the AMF 905 may transmit a REGISTRATION ACCEPT to the NR NAS 903, at operation 1024. Thus, the UE 901 may be able to avail services over the non-3GPP access.

The scenario illustrated in Fig. 10 may be equally applicable when the "AccessType" indicated in the deregistration requests at operations 1002 and 1004 are interchanged, i.e., when the UE 101 initiates DEREGISTRATION REQUEST with AccessType: Non-3GPP and the network initiates DEREGISTRATION REQUEST with AccessType:3GPP. Moreover, the method provided in Fig. 10 may avoid collisions occurring in scenarios when the UE initiated de-registration procedure encounters other network initiated 5GMM signaling such as 5GMM common procedures (e.g., identity, security mode command, generic UE configuration update, and NAS TRANSPORT procedures etc.), 5GMM specific procedures (e.g., Registration Request, authentication, and key agreement procedure etc.), and 5GMM connection management procedures (e.g., service request, notification procedure etc.).

Particularly, the UE 901 and the network may handle both procedures independently without aborting any procedure when the access type is not same. In some embodiments, in case handling both procedures in parallel results in the UE 901 performing more than one specific procedure (e.g., deregistration procedure and registration procedure) on the same access at the same time, then the UE 901 may perform local deregistration and proceed with the registration procedure.

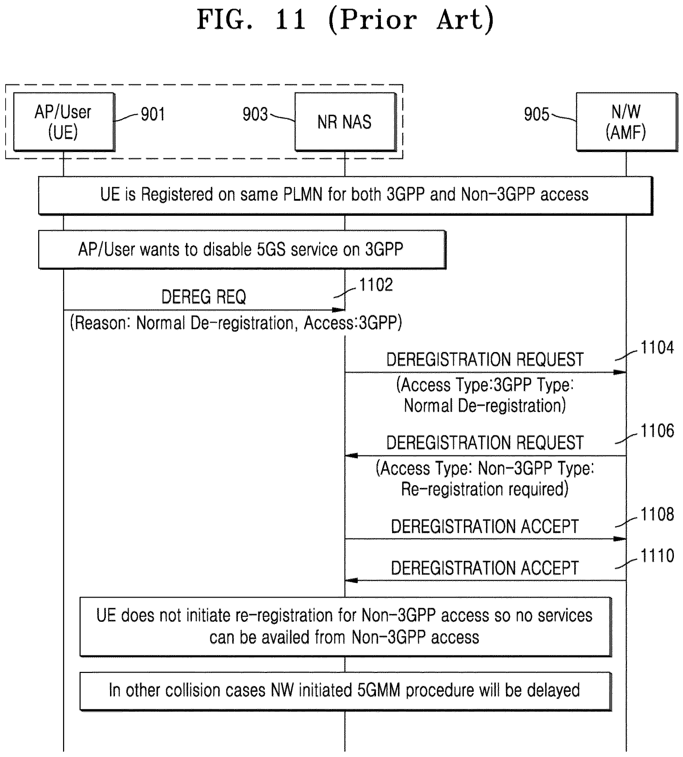

Figure 11 illustrates a sequence of operations depicting a problem in a collision of a UE-initiated de-registration procedure during non-switch off condition and a network initiated de-registration procedure, according to a conventional technique.

In some cases, the sequence of operations correspond to communication between the AP/User (UE 901) and the network 905 (e.g., a 5G network AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 11. Initially, the UE 901 is powered on. Further, the UE 901 may be registered on the same Public Land Mobile Network (PLMN) for both the 3GPP access and the non-3GPP access, and the user has triggered disabling of 5GS services for 3GPP access only.

Specifically, at operation 1102, the UE 901 initiates the deregistration procedure for 3GPP access by transmitting DEREGISTRATION REQUEST with AccessType: 3GPP and reason/type as normal de-registration (i.e., during non-switch off condition) to the NR NAS 903. At operation 1104, the NR NAS 903 may transmit the UE initiated DEREGISTRATION REQUEST to the network 905/AMF 905. At operation 1106, the network initiates the deregistration procedure for the non-3GPP access. Therefore, the AMF 905 transmits the DEREGISTRATION REQUEST with AccessType: non-3GPP and reason/type as re-registration required to the NR NAS 903. Additionally, at operation 1106, the same collision can be encountered between UE initiated De-Registration with other Network initiated 5GMM Signaling such as a 5GMM Common Procedure (e.g., Identity Security Mode Command, Generic UE configuration update, NAS TRANSPORT procedures etc.), a 5GMM Specific Procedures (e.g., Registration Request, Authentication and key agreement procedure for 5G ProSe UE-to-network relay etc.), and 5GMM Connection Management Procedures (e.g., Service Request notification Procedure etc.).

Further, at operation 1108, the UE 901 may accept the network initiated DEREGISTRATION REQUEST and therefore the NR NAS 903 transmits a DEREGISTRATION ACCEPT message to the AMF 905. Furthermore, at operation 1110, the network may accept the UE initiated DEREGISTRATION REQUEST and therefore, the AMF 905 may transmit the DEREGISTRATION ACCEPT message to the NR NAS 903. However, the UE 901 and/or the network may not perform re-registration for the non-3GPP access that may lead to no services over the non-3GPP access.

The scenario illustrated in Fig. 11 may be equally applicable when the "AccessType " indicated in the deregistration requests at operations 902 and 906 are interchanged (e.g., as described in FIG. 10). Moreover, the collision may also occur when the UE initiated de-registration procedure encounters other network initiated 5GMM signalling such as, 5GMM common procedures, 5GMM specific procedures, and 5GMM connection management procedures.

Additionally, in some cases, the UE 901 may ignore, and the network may abort the network initiated procedure which results in a delay in performing the network initiated 5GMM procedure.

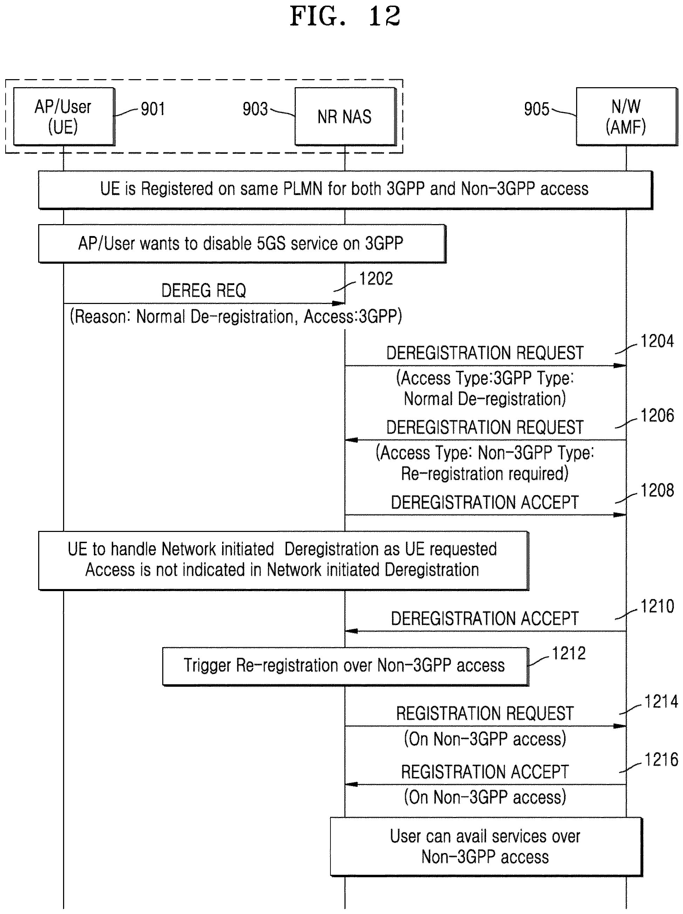

Figure 12 illustrates a sequence of operations for handling collision of the UE-initiated de-registration procedure during the non-switch off condition and the network initiated de-registration procedure, according to an embodiment of the present disclosure. In this scenario, the sequence of operations correspond to a communication between the AP/User (UE 901) and the network 905 (e.g., a 5G network AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 12. Operations 1202-1210 are similar to operations 1102-1110 (described in FIG. 11), therefore a description of these operations has been omitted for the sake of brevity.

According to the method illustrated in Fig. 12, the UE 901 may store the access type information while transmitting the DEREGISTRATION REQUEST at operation 1202. Additionally, after operation 1208, the UE 901 identifies that the network initiated DEREGISTRATION REQUEST corresponds to different access type compared to the UE initiated DEREGISTRATION REQUEST. Therefore, the UE may perform initial registration on the non-3GPP access before availing any service. For instance, at operation 1212, the UE 901 may trigger the re-registration over the non-3GPP access. According to an embodiment, in a collision scenario (i.e., other collision scenarios), the UE 901 may parallelly (e.g. simultaneously, or in parallel) process the network-initiated procedures. Additionally or alternatively, both UE-initiated and network-initiated procedure may be processed in parallel. Further, at operation 1214, the NR NAS 903 may transmit REGISTRATION REQUEST for the non-3GPP access to the AMF 905. At operation 1216, the NR NAS 903 may receive a REGISTRATION ACCEPT message from the AMF 903 upon successful registration of the UE 901 with the network over the non-3GPP access. After performing the registration, the UE 901 may avail required services over the non-3GPP access.

The scenario illustrated in Fig. 12 may be equally applicable when the "AccessType " indicated in the deregistration requests at operations 1202 and 1206 are interchanged (as described in FIG. 10). Moreover, the method may avoid collisions (i.e., at operation 1206) occurring in the scenarios when the UE initiated de-registration procedure encounters some of the other network initiated 5GMM signalling such as, 5GMM common procedures, 5GMM specific procedures, and 5GMM connection management procedures. For example, 5GMM common procedures may include (but not limited to) Identity Security Mode Command, Generic UE configuration update, NAS TRANSPORT procedures etc. Additionally, 5GMM specific procedures may refer to Registration Request, Authentication and key agreement procedure for 5G ProSe UE-to-network relay etc. and 5GMM connection management procedures may refer to Service Request notification Procedure etc. At operation 1206, Network initiated 5GMM signaling procedure is ignored at both UE and Network side.

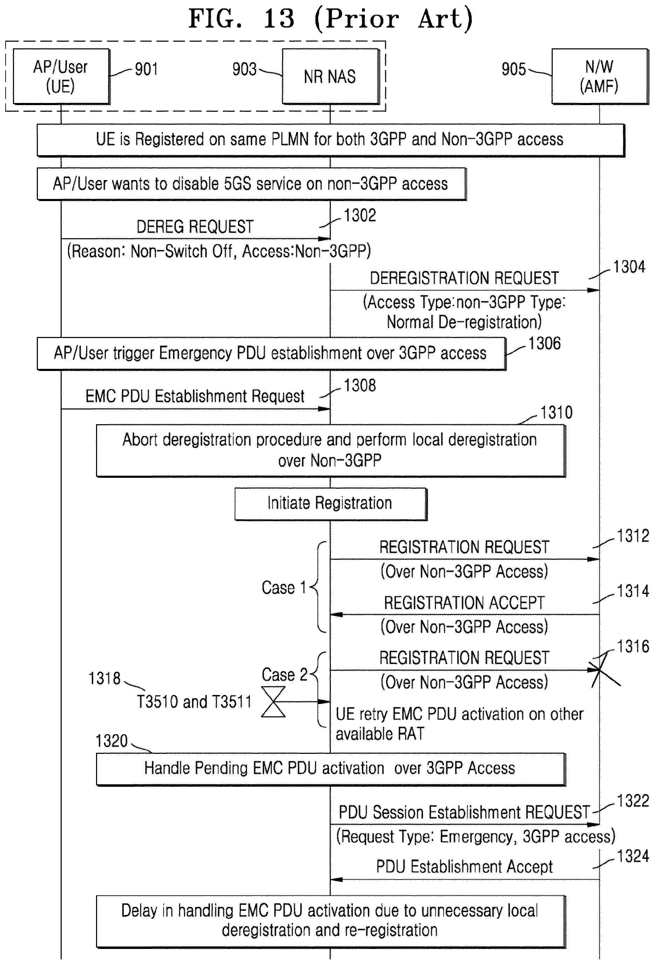

Figure 13 illustrates a sequence of operations depicting a problem in a collision of a UE-initiated de-registration procedure and emergency PDU session establishment procedure, according to a conventional technique. In some cases, the sequence of operations correspond to a communication between the AP/User (UE 901) and the network 905 (e.g., a 5G network AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 13.

Initially, the UE 901 is powered on. Further, the UE 901 may be registered on the same Public Land Mobile Network (PLMN) for both the 3GPP access and the non-3GPP access, and the user has triggered disabling of 5GS services for non-3GPP access only. Specifically, at operation 1302, the UE 901 initiates the deregistration procedure for the non-3GPP access by transmitting DEREGISTRATION REQUEST with AccessType: Non-3GPP and reason/type as normal de-registration (i.e., during non-switch off condition) to the NR NAS 903. At operation 1304, the NR NAS 903 may transmit the UE initiated DEREGISTRATION REQUEST to the network 905/AMF 905. However, at operation 1306, the user triggers an emergency PDU session establishment request over the 3GPP access. Further, at operation 1308, the UE 901 may transmit an Emergency (EMC) PDU session establishment request to the NR NAS 903.

At operation 1310, the UE 901 may abort the ongoing de-registration procedure for the non-3GPP access, perform local deregistration, and then trigger registration for the non-3GPP access. Specifically, the UE 901 may initiate the registration procedure according to either case 1 or case 2. For instance, according to case 1, at operation 1312, the UE 901 may transmit the REGISTRATION REQUEST for the non-3GPP access to the network 905 via the NR NAS 903. At operation 1314, the network may accept the REGISTRATION REQUEST and the AMF 905 may transmit the REGISTRATION ACCEPT message to the NR NAS 903. However, this local de-registration and re-registration may cause a considerable amount of delay in handling emergency services. Furthermore, if the network rejects or a lower layer failure occurs during the registration procedure, the procedure for getting emergency services may be further delayed. For instance, according to case 2, at operation 1316, when the UE 901 may transmit the REGISTRATION REQUEST for the non-3GPP access to the network 905 via the NR NAS 903, the network may reject the request. Further, at operation 1318, the UE 901 may initiate a predefined timer (for example, T3510 or T3511) and retry EMC PDU activation on other available RAT.

In wireless communication systems, a lower-layer failure refers to a problem or fault occurring at the lower layers of the communication protocol stack. In the context of the OSI (Open Systems Interconnection) model, these layers include the physical layer (Layer 1) and the data link layer (Layer 2). Lower-layer failures can affect the transmission of data packets over the wireless medium, leading to disruptions, errors, or degraded performance in communication. For example, a lower-layer failure may include (but is not limited to) physical layer failures (i.e., signal interference or attenuation, multipath fading, channel errors, hardware malfunctions, etc.) or data link layer failures (i.e., loss or corruption of data frames, etc.).

Specifically, at operation 1320, the UE 901 may handle the pending EMC PDU activation over the 3GPP access. At operation 1322, the NR NAS 903 may transmit the PDU Session Establishment REQUEST with request type as emergency over 3GPP access to the AMF 905. At operation 1324, the network may accept the PDU establishment request, and the AMF 905 may transmit the PDU Establishment Accept message to the NR NAS 903. However, this may lead to a delay in handling EMC PDU activation due to unnecessary local deregistration and re-registration. The scenario illustrated in Fig. 13 may be equally applicable when the "AccessType" indicated in the requests at operations 1302 and 1304 are interchanged.

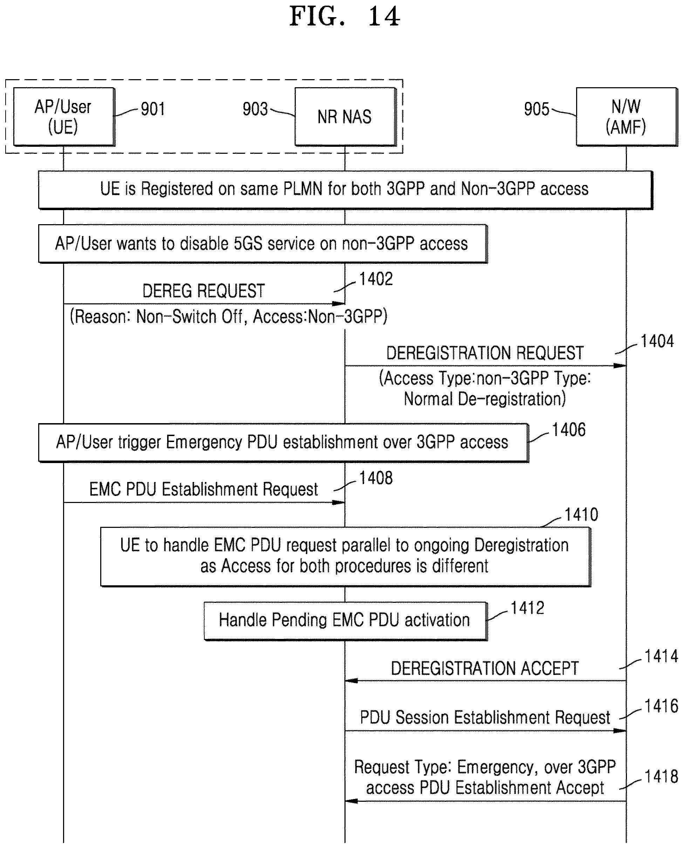

Figure 14 illustrates a sequence of operations for handling collisions of the UE-initiated de-registration procedure and the emergency PDU establishment procedure, according to an embodiment of the present disclosure. In this scenario, the sequence of operations correspond to a communication between the AP/User (UE 901) and the network 905 (e.g., a 5G network AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 14. Operations 1402-1408 are similar to operations 1302-1308, therefore a description of these operations has been omitted for the sake of brevity.

According to the method illustrated in Fig. 14, the UE 901 may store the access type information while transmitting the DEREGISTRATION REQUEST at operation 1402. At operation 1408, the UE 901 may store the access type information on which the Emergency PDU establishment is triggered. Additionally, at operation 1408, the UE 901 compares previously stored access type information for the deregistration procedure with the stored access type information for the emergency PDU establishment procedure. At operation 1410, the UE 901, upon identifying that the access type information for the deregistration procedure does not match with the access type information for the emergency PDU establishment procedure, handles both procedures independently without aborting any procedure and performs operations from 1412-1418. Specifically, at operation 1412, the UE 901 handles the pending EMC PDU activation. At operation 1414, the AMF 905 may transmit the DEREGISTRATION ACCEPT message to the NR NAS 903. At operation 1416, the NR NAS 903 may transmit the PDU Session Establishment Request with request type as emergency and over 3GPP access to the AMF 905. At operation 1418, the network may accept the PDU session establishment request and the AMF 905 may transmit the PDU Establishment Accept message to the NR NAS 903. This enables effective and efficient establishment of emergency PDU session (i.e., without any unnecessary delay).

In some cases, if the access type information for the deregistration procedure matches with the access type information for the emergency PDU establishment procedure, the UE 901 may abort the UE initiated deregistration procedure and proceed with re-registration and further followed by the emergency PDU establishment procedure.

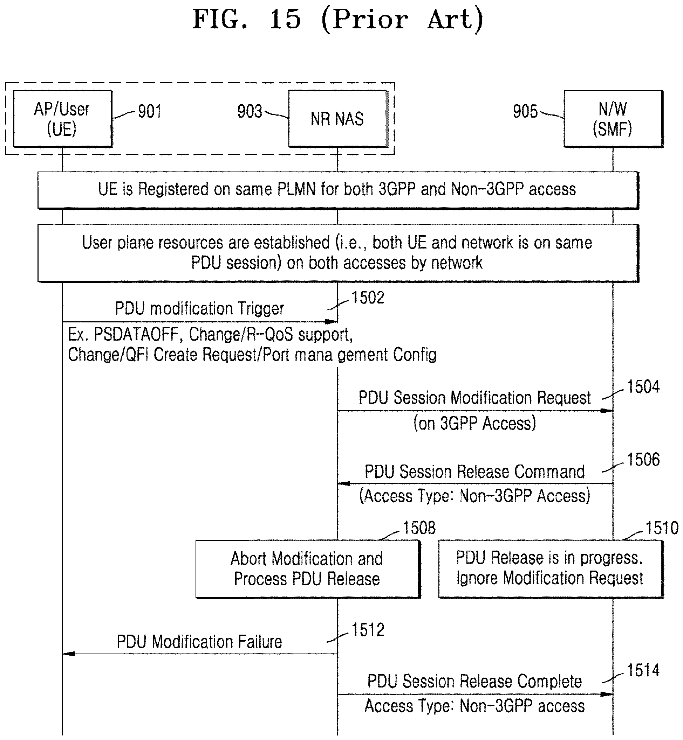

Figure 15 illustrates a sequence of operations depicting a first problem in collision of a UE-initiated 5G Session Management (5GSM) procedure and a network initiated 5GSM procedure, according to a conventional technique. For instance, a collision between UE initiated PDU Modification procedure and network initiated PDU Session Release procedure. Referring to FIG. 15, the sequence of operations correspond to a communication between the AP/User (UE 901) and the network 905 (e.g., a 5G network entity Session Management Function (SMF) 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "SMF 905" may be used interchangeably throughout the description of Fig. 15.

Initially, the UE 901 is powered on. Further, the UE 901 may be registered on the same Public Land Mobile Network (PLMN) for both the 3GPP access and the non-3GPP access, and the user plane resources are established i.e., the UE 901 and the network 905 has same PDU session activated on both the access types. In particular, multi-access PDU (MA PDU) is established over both the 3GPP and the Non-3GPP access. In an embodiment, the MA PDU with Data Network Name (DNN): IP Multimedia Service (IMS) is established between the UE 901 and the network 905.

At operation 1502, the UE 901 may trigger a PDU session modification procedure for DNN:IMS. The PDU modification procedure may be initiated on change in Quality of Service (QoS) or features support like packet switch (PS) Data Off, R-QOS etc. over 3GPP access. In response to said trigger, at operation 1504, the NR NAS 903 may transmit a PDU session modification request to the SMF of the network 905 on 3GPP access. Simultaneously, at operation 1506, the network 905 may initiate the PDU session release procedure for the non-3GPP access. Specifically, at operation 1506, the SMF of the network 905 may transmit a PDU session release request with access type as Non-3GPP to the NR NAS 903.

In response to received PDU session release request, at operation 1508, the UE 901 may abort the ongoing the UE initiated PDU session modification procedure. Similarly and simultaneously, at operation 1510, the network 905 may ignore the UE initiated PDU session modification request as the network initiated PDU session release request is in progress. Thereafter, at operation 1512, the UE 901 may receive PDU modification failure indication from NR NAS 903 which may lead to failure/delay of user services. For instance, the user may experience unexpected data charged when PSDATAOFF feature configuration is out of sync or may experience challenge in data browsing due to packet drop when R-QOS configuration is out of sync. The same collision (such as that in operations 1504 and 1506) may be encountered between a network initiated PDU Session Release command with other UE initiated 5GSM procedure like PDU session Establishment Request (Handover), PDU Session Release Request, etc. Similarly, at operations 1508 and 1510, the UE initiated 5GSM procedures get aborted at both the UE 901 and the network 905. At operation 1514, the UE 901 may transmit the PDU session release complete message to the network 905 via the NR NAS 903.

Therefore, even though PDU is not released on the access where PDU modification is triggered, modification procedure is considered failed impacting user experience (in the form of a call drop, packet lost, browsing discontinuities, etc.). Moreover, the same problem may happen when the access over which the UE initiated PDU session modification procedure and the access over which the network triggered PDU session release command are interchanged.

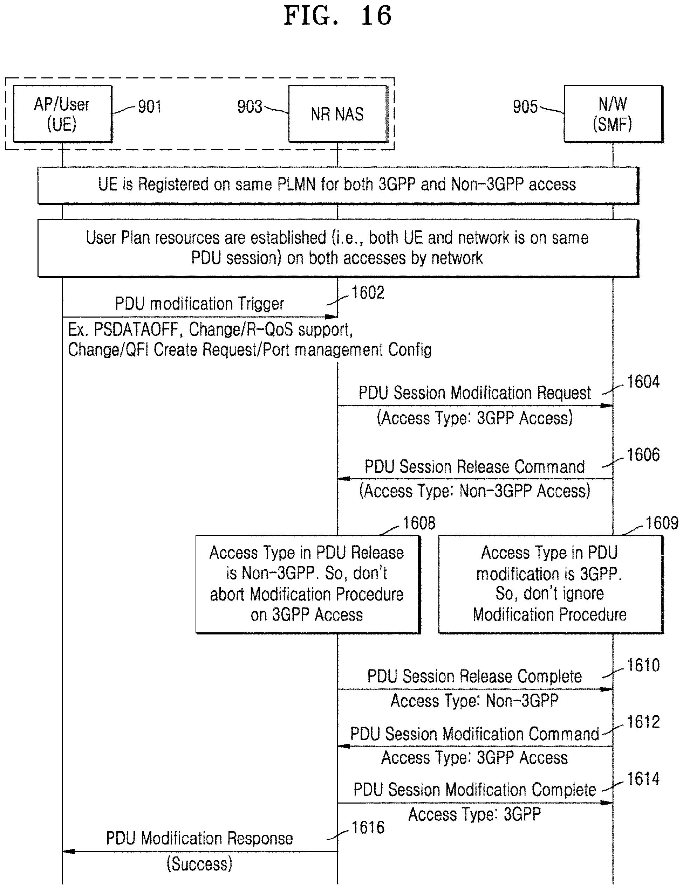

Figure 16 illustrates a sequence of operations for handling collisions of the UE-initiated 5GSM procedure and the network initiated 5GSM procedure, according to an embodiment of the present disclosure. In some cases, the sequence of operations correspond to a communication between the AP/User (UE 901) and the network 905 (e.g., a 5G network entity Session Management Function (SMF) 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "SMF 905" may be used interchangeably throughout the description of Fig. 16. Operations 1602-1606 are similar to operations 1502-1506, therefore a description of these operations has been omitted for the sake of brevity.

According to the method illustrated in Fig. 16, the UE 901 may store the access type information while transmitting the PDU Session Modification Request at operation 1604. At operation 1606, the network 905 may store the access type information on which the PDU Session Release Command is triggered. At operation 1608, the UE 901 and/or NR NAS 903 may determine that the access type in the PDU Session Release Command triggered by the network is non-3GPP that is different on which PDU Session Modification Request has been made. Specifically, the UE 901 may compare the access type information stored for the UE initiated PDU session modification procedure with the access type information in the network initiated PDU session release command procedure to determine whether the procedure corresponds to different access types. Based on said comparison, if any of access type matches among the plurality of access types between the UE initiated PDU Session Modification procedure and Network initiated PDU Session Release Command procedure, then the UE initiated PDU Session Modification procedure may be aborted, otherwise both the procedures are progressed. Therefore, the UE 901 may not abort the PDU session modification procedure triggered on 3GPP access.

At operation 1609, the network 905 may also determine that the access type corresponding to PDU session modification procedure is 3GPP access. Thus, the network 905 may not ignore the PDU session modification procedure. At operation 1610, the NR NAS 903 may transmit the "PDU session Release Complete" message for access type non-3GPP to the SMF and/or the network 905. Additionally, at operation 1612, the network 905 may transmit the PDU session modification command for 3GPP access in response to the UE initiated PDU session modification procedure to the NR NAS 903. At operation 1614, the NR NAS 903 may transmit the "PDU session Modification Complete" message upon successfully modifying the PDU session on the 3GPP access based on the received PDU session modification command from the network 905. At operation 1616, the NR NAS 903 may transmit "PDU Modification Response" to the UE 901 with a status as "Success", indicating that the UE initiated PDU session modification procedure is successfully completed.

As described herein, the same collision (such as that in operations 1604 and 1606) may be encountered between a network initiated PDU Session Release command with other UE initiated 5GSM procedure like PDU session Establishment Request (Handover), PDU Session Release Request, etc. As described with reference to operations 1608-1616, both the UE initiated 5GSM procedures and network initiated 5GSM procedures are handled parallelly. Moreover, the method disclosed in Fig. 16 may be applicable even when the access type in the two procedures are interchanged.

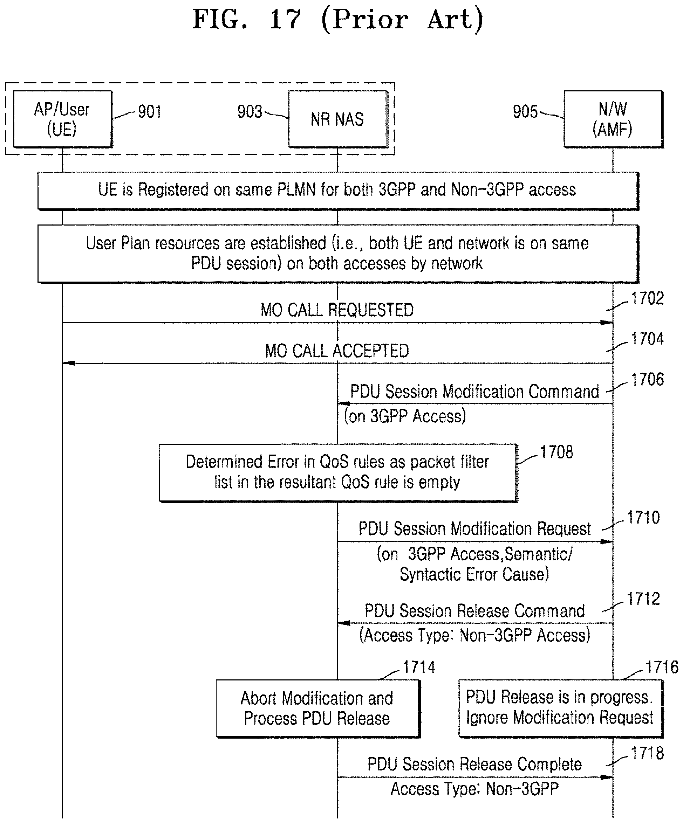

Figure 17 illustrates a sequence of operations depicting a second problem in collision of a UE-initiated 5GSM procedure and a network initiated 5GSM procedure, according to a conventional technique. For instance, the collision between the UE initiated PDU Modification procedure and the network initiated PDU Session Release procedure is discussed. In some cases, the sequence of operations correspond to a communication between the AP/User (UE 901) and the network 905 (e.g., a 5G network entity AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 17.

Initially, the UE 901 is powered on. Further, the UE 901 may be registered on the same Public Land Mobile Network (PLMN) for both the 3GPP access and the non-3GPP access, and the user plane resources are established i.e., the UE 901 and the network 905 has same PDU session activated on both the access types. In some examples, multi-access PDU (MA PDU) may be established over both the 3GPP and the Non-3GPP access. In an embodiment, the MA PDU with Data Network Name (DNN): IP Multimedia Service (IMS) may be established between the UE 901 and the network 905.

At operations 1702-1704, an IMS call (MO call) is established over the 3GPP access. At operation 1706, the network 905 may initiate a PDU session modification command over 3GPP access. In an embodiment, the network 905 may initiate the PDU session modification command to allocate new QoS Flow ID (QFI) and QoS rules for the established IMS call.

However, at operation 1708, the NR NAS 903 and/or the UE 901 may detect semantic/syntactic errors in the network initiated PDU Session Modification procedure. For instance, the UE 901 may determine error in QoS rules as packet filter list in a resultant QoS is empty. The UE 901 may initiate PDU Session Modification procedure to indicate error cause. Specifically, at operation 1710, the NR NAS 903 may transmit the PDU session modification request on 3GPP access with semantic/syntactic error cause. However, at operation 1712, the network 905 may initiate a PDU session release command for non-3GPP access. Therefore, a collision may occur between the UE initiated PDU session modification procedure and the network PDU session release procedure (as described with reference to Fig. 15).

Further, operations 1714, 1716, and 1718 are similar to operations 1508, 1510, and 1514 of the Fig. 15. Therefore, repeated description of the operations 1714-1718 have been omitted herein for the sake of brevity. Specifically, the UE 901 may abort the ongoing UE initiated PDU Session Modification procedure which leads to failure/delay of user services. For example, the user can experience call drop because of the collision behavior on NR. As described, the same collision (such as that at operations 1710 and 1712) may be encountered between a network initiated PDU Session Release command with other UE initiated 5GSM procedure like PDU session Establishment Request (Handover), PDU Session Release Request, etc. In some cases, at operation 1714, the UE initiated 5GSM procedures get aborted at both UE and network side. According to an example, the QoS rules may not be established properly which results in abortion of the procedure and call establishment failure.

Further, the same problem happens when the access over which user triggered IMS call is established and the "AccessType" indicated in the Network triggered PDU Session Release Command are interchanged.

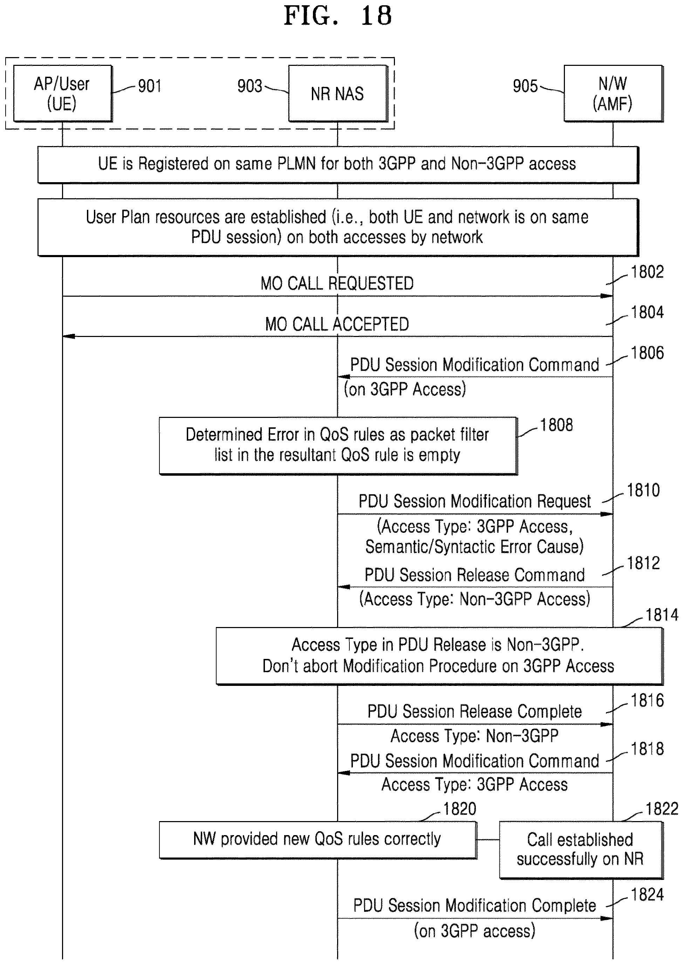

Figure 18 illustrates a sequence of operations for handling collisions of the UE-initiated 5GSM procedure and the network initiated 5GSM procedure, according to another embodiment of the present disclosure. In some cases, the sequence of operations correspond to a communication between the AP/User (UE 901) and the network 905 (e.g., a 5G network entity AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 18. Operations 1802-1812 are similar to operations 1702-1712, therefore repeated description of these operations have been omitted herein for the sake of brevity.

According to the method illustrated in Fig. 18, the UE 901 may store the access type information while establishing the IMS call. At operation 1812, the network 905 may store the access type information on which the PDU Session Release Command is triggered. At operation 1814, the UE 901 and/or the NR NAS 903 may determine that access type corresponding to the network initiated PDU release procedure is different than the access type corresponding to IMS call or the UE initiated PDU session modification procedure, therefore, the UE 901 and/or the NR NAS 903 may not abort the modification procedure on the 3GPP access. Additionally, the network 905 may also determine that the access type corresponding to IMS call, or the UE initiated PDU session modification procedure is different than the network initiated PDU release procedure. Thus, the network 905 may not ignore the IMS call or the UE initiated PDU session modification procedure.

Additionally or alternatively, in case any of access type matches among the plurality of access types between the UE initiated PDU Session Modification procedure and the network initiated PDU Session Release Command procedure then the UE initiated PDU Session Modification procedure is aborted, otherwise both the procedures may be progressed. At operation 1816, the NR NAS 903 may transmit the PDU session release complete message for the non-3GPP access to the network 905. Next, at operation 1818, the network 905 may transmit the PDU session modification command for 3GPP access, in response to the UE initiated PDU session modification request. In particular, at operation 1820, the NR NAS 903 may receive corrected QoS rules from the network. Additionally, at operation 1822, the IMS call is successfully established on NR. Moreover, at operation 1824, the PDU session modification complete message is transmitted to the network 905 by the NR NAS 903 for 3GPP access.

As described, the same collision (such as that at operations 1810 and 1812) may be encountered between a network initiated PDU Session Release command with other UE initiated 5GSM procedure like PDU session Establishment Request (Handover), PDU Session Release Request, etc. Additionally, at operations 1814-1818, both the UE initiated 5GSM procedures and network initiated 5GSM procedures are handled parallelly. The method described in Fig. 18 may also be applicable to other scenarios of collisions that may be encountered between the network initiated PDU Session Release Command with the UE initiated PDU Session Release Request Procedure. Moreover, the method described in Fig. 18 may also be applicable even when the access type in the two procedures are interchanged.

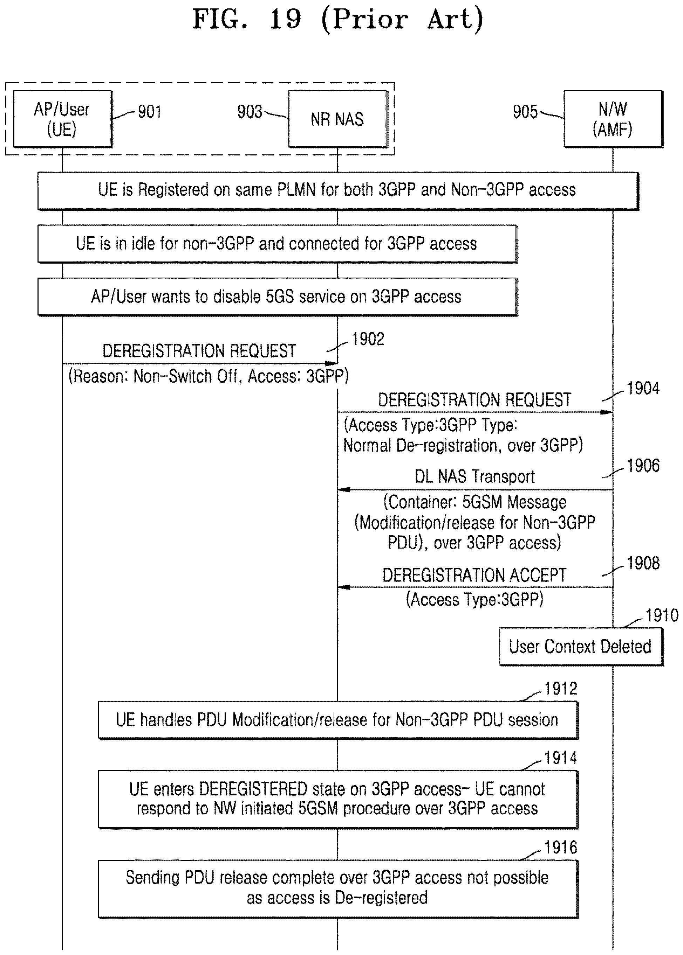

Figure 19 illustrates a sequence of operations depicting a problem in collision of a UE-initiated de-registration procedure and a network initiated 5GSM procedure, according to a conventional technique. In this scenario, the sequence of operations correspond to a communication between the UE 901 and the network 905 (e.g., a 5G network entity AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 19.

The UE 901 may be registered on the same Public Land Mobile Network (PLMN) for both the 3GPP access and the non-3GPP access. Further, the UE 901 is idle for the non-3GPP access and is connected for the 3GPP access. In some cases, the user wants to disable 5G services on the 3GPP access. Therefore, at operation 1902, the UE 901 transmits a DEREGISTRATION REQUEST with reason as non-switch off and access type as 3GPP to the NR NAS 903. Next, at operation 1904, the NR NAS 903 may transmit the UE initiated DEREGISTRATION REQUEST to the network 905 indicating the access type as 3GPP and request type as normal De-registration over 3GPP. In some cases, at operation 1906, the network 905 may initiate the 5GSM procedure i.e., transmit the DL NAS transport message over the 3GPP access to the NR NAS 903. The DL NAS transport message may include a 5GSM message corresponding to modification and/or release for the non-3GPP PDU. Additionally, at operation 1908, the network 905 may accept the UE initiated De-registration procedure and transmit the DEREGISTRATION ACCEPT message with access type as 3GPP to the NR NAS 903. Next, at operation 1910, the network 905 may delete the user context stored at the network 905.

At operation 1912, the UE 901 handles and/or processes the network initiated PDU modification and/or release for the non-3GPP PDU session. In some cases, at operation 1914, the UE 901 may enter the DEREGISTERED state on the 3GPP access and the UE 901 may not be able to respond to the network initiated 5GSM procedure over the 3GPP access. At operation 1916, the UE 901 may not be able to send PDU modification/release complete message over 3GPP access, and the access is De-registered. In particular, the UE 901 may then ignore the DL NAS transport message from the network 905. In some cases, the collision may happen when the access type in the two procedures, i.e., the UE initiated procedure and the network initiated procedure are interchanged.

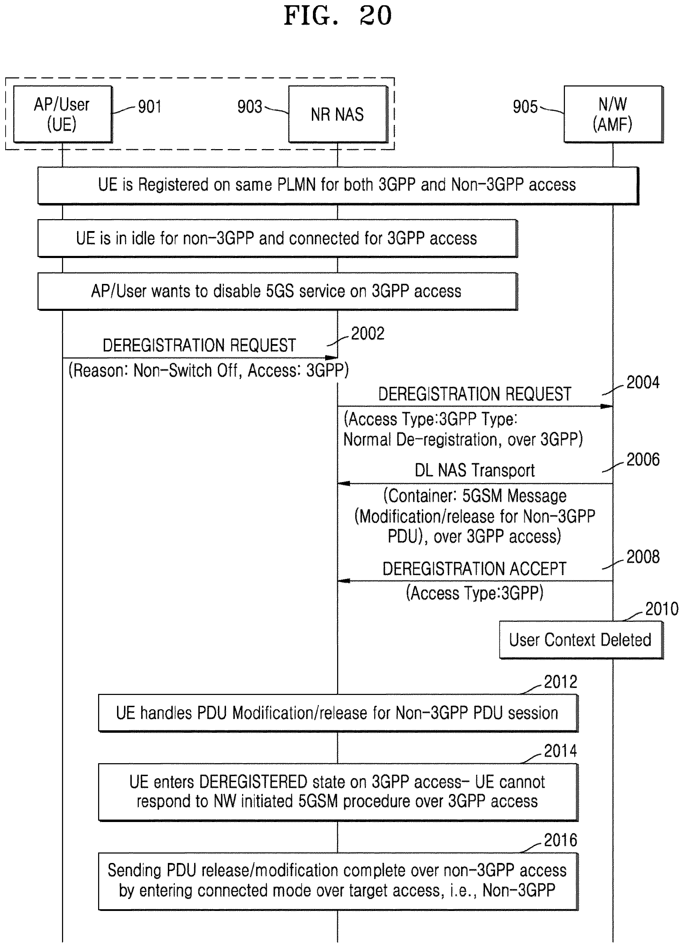

Figure 20 illustrates a sequence of operations for handling collisions of the UE-initiated de-registration procedure and the network initiated 5GSM procedure, according to an embodiment of the present disclosure. In this scenario, the sequence of operations correspond to a communication between the AP/User (UE 901) and the network 905 (e.g., a 5G network entity AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 20. Operations 2002-2014 are similar to operations 1902-1914, therefore a description of these operations has been omitted for the sake of brevity.

According to the method illustrated in Fig. 20, at operation 2004, the UE 901 may store the access type information while transmitting the DEREGISTRATION REQUEST. At operation 2006, the network 905 may store the access type information in the DL NAS transport message. The UE 901 and/or the NR NAS 903 may determine that access type corresponding to the UE initiated DEREGISTRATION procedure is different than access type corresponding to DL transport message. Therefore, the UE 901 and/or the NR NAS 903 may not abort any procedure and handle both the procedures independently. For example, at operation 2012, the UE 901 handles the network initiated PDU modification and/or release for the non-3GPP PDU session. In some cases, at operation 2014, the UE 901 may enter the DEREGISTERED state on the 3GPP access and the UE 901 may not be able to respond to the network initiated 5GSM procedure over the 3GPP access.

Specifically, at operation 2016, the UE 901 may determine the other access type i.e., the non-3GPP on which the UE 901 is in the idle mode can be used to send the PDU release/modification complete message, as per the DL NAS transport message. Thus, the UE 901 may enter into connected mode for the non-3GPP access and transmit the PDU release/modification complete message.

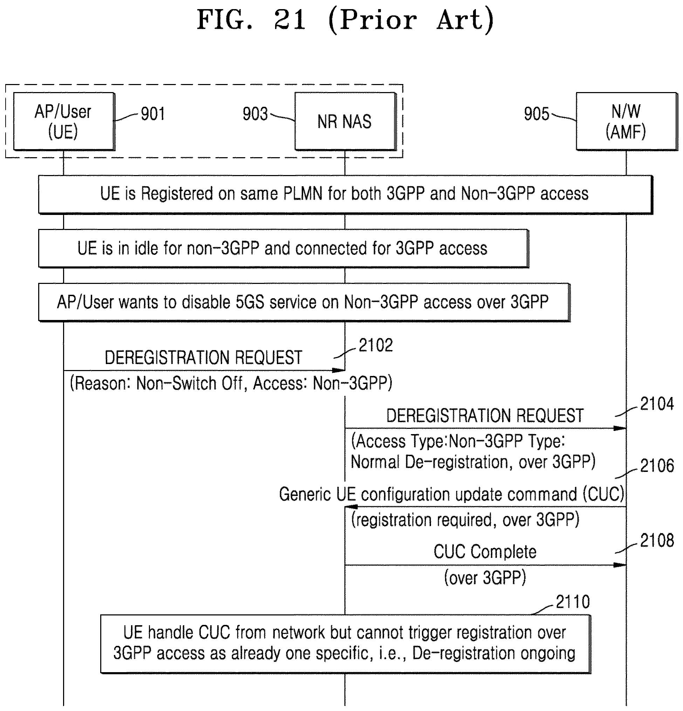

Figure 21 illustrates a sequence of operations depicting a problem in collision of a UE-initiated de-registration procedure and a network initiated Configuration Update Command (CUC) procedure, according to a conventional technique. In some cases, the sequence of operations correspond to a communication between the UE 901 and the network 905 (e.g., a 5G network entity AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 21.

The UE 901 may be registered on the same Public Land Mobile Network (PLMN) for both the 3GPP access and the non-3GPP access. Further, the UE 901 is idle for the non-3GPP access and is connected for the 3GPP access. Additionally, the user wants to disable 5G services on the non-3GPP access over the 3GPP access. Therefore, at operation 2102, the UE 901 transmits a DEREGISTRATION REQUEST with reason as non-switch off and access type as non-3GPP to the NR NAS 903. Next, at operation 2104, the NR NAS 903 may transmit the UE initiated DEREGISTRATION REQUEST to the network 905 indicating the access type as non-3GPP and request type as normal De-registration over 3GPP access. However, at operation 2106, the network 905 may initiate generic UE CUC procedure over 3GPP access and transmit Generic UE CUC command that requires registration. At operation 2108, the UE 901 may transmit the CUC complete message over 3GPP access. However, at operation 2110, the UE 901 may not be able to trigger registration over the 3GPP access as already a specific, DEREGISTRATION procedure as initiated at operation 2102 is in progress which leads to delay in updating important information like subscription information, slice information, steering of roaming (SOR) information, etc.

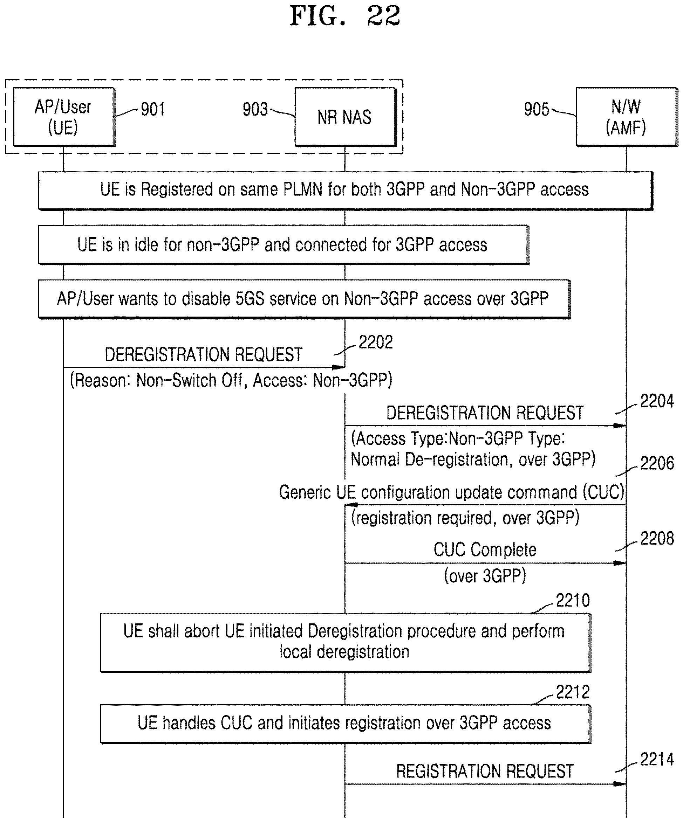

Figure 22 illustrates a sequence of operations depicting a method for handling collisions of the UE-initiated de-registration procedure and the network initiated CUC procedure, according to an embodiment of the present disclosure. In some cases, the sequence of operations correspond to a communication between the AP/User (UE 901) and the network 905 (e.g., a 5G network entity AMF 905) via the NR NAS 903. In an embodiment, the AP/User (UE 901) and the NR NAS layer 903 may correspond to the UE 101. Further, the network entity 905 may correspond to the 5GCN 105. The terms "network 905", "network entity 905", and/or "AMF 905" may be used interchangeably throughout the description of Fig. 22. Operations 2202-2208 are similar to operations 2102-2108, therefore a description of these operations has been omitted for the sake of brevity.

According to the method illustrated in Fig. 22, at operation 2204, the UE 901 may store the access type information while transmitting the DEREGISTRATION REQUEST. At operation 2206, the network 905 may store the access type information in the generic UE CUC command while transmitting the generic UE CUC and additionally transmits a CUC complete message at operation 2208. Therefore, at operation 2210, the UE 901 may abort the UE initiated deregistration procedure and perform the local deregistration. Next, at operation 2212, the UE 901 handles the CUC procedure and initiates registration over the 3GPP access. Specifically, at operation 2214, the UE 901 may transmit the REGISTRATION REQUEST to the network 905. Therefore, the UE 901 and/or the NR NAS 903 may determine that access type corresponding to the UE initiated DEREGISTRATION procedure is different than access type corresponding to the network initiated CUC procedure. Accordingly, the UE 901 and/or the NR NAS 903 may not abort any procedure and handle both the procedures independently.

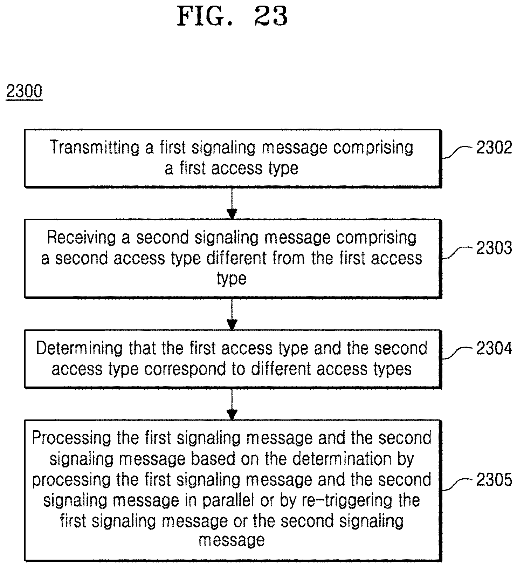

Figure 23 illustrates an example process flow depicting a method 2300 for handling collisions of signaling messages, according to embodiments of the present disclosure.

At step 2302, the method 2300 may include transmitting a first signaling message, wherein the first signaling message is associated with a first access type from among a plurality of access types. Additionally, at step 2303, the method 2300 may include receiving a second signaling message that is associated with a second access type from among a plurality of access types. The second access type and the first access type are different from each other. The UE 901 is registered for the first access type and the second access type. In an embodiment, the first access type may be one of 3GPP access type or non-3GPP access type, and the second access type may be the other of the 3GPP access type or non-3GPP access type. In an embodiment, the method 2300 may also include transmitting, by the UE 901 to the network entity 905, a de-registration request with the first access type as the first signaling message. The method 2300 may further include transmitting, by the network entity 905 to the UE 901, a de-registration request with the second access type as the second signaling message. Additionally, the method 2300 may include detecting, by the network entity 905, that the first access type received in the de-registration request from the UE 901 is different from the second access type transmitted in the de-registration request to the UE 901 where processing the first signalling message and the second signalling message comprises re-triggering the deregistration request with the second access type as the second signaling message.

According to an embodiment, the method 2300 may include transmitting, by the UE 901 to the network entity 905, a de-registration request with the first access type as the first signaling message. Further, the method 2300 may include transmitting, by the network entity 905 to the UE 901, a de-registration request with the second access type as the second signaling message. The second signaling message indicates that re-registration is required over the second access type. Thereafter, the method 2300 may include detecting, by the UE 901, that the first access type transmitted in the de-registration request to the network entity is different from the second access type received in the de-registration request from the network entity. Further, processing the first signalling message and the second signalling message may include processing the de-registration request from the network entity to trigger re-registration of the UE 901 with the network entity 905 over the second access type.

According to an embodiment, the method 2300 may include storing, by the UE 901, information associated with the first access type and the second access type. Furthermore, the method 2300 may include detecting, by the UE 901, that the first access type does not match with the second access type and parallelly processing the de-registration request and the emergency PDU session establishment request.

At step 2304, the method 2300 may include determining that the first access type and the second access type relate to a different access type from among the multiple (or plurality of) access types.

Next, at step 2305, the method may process the first signaling message and the second signaling message based on the determination by processing the first signaling message and the second signaling message in parallel or by re-triggering the first signaling message or the second signaling message. In some cases, the method 2300 may include processing the first signaling message and the second signaling message by performing one of parallelly processing of the first signaling message and the second signaling message; or re-triggering one or more of the first signaling message or the second signaling message.

In an embodiment, a same packet data unit (PDU) session is established over the first access type and the second access type. Further, the method 2300 may include transmitting, by the UE 901 to the network entity 905, a PDU modification request for the PDU session over the first access type as the first signaling message. Next, the method 2300 may include transmitting, by the network entity 905 to the UE 901, a PDU release command message for the PDU session over the second access type as the second signaling message. Thereafter, the method 2300 may include storing, by the UE 901, information associated with the first access type and the second access type. Finally, the method 2300 may include detecting, by the UE 901, that if the PDU is released for the second access type and the same PDU is still active on the first access type, then parallel processing of the PDU modification request and the PDU release command message may be performed. In a non-limiting embodiment, the network-initiated message is one of a 5GMM common procedure comprising at least one of Downlink (DL) NAS (Non-Access Stratum) transport messages, generic UE configuration update command, Identity Request, Authentication Request, or Notification procedure.

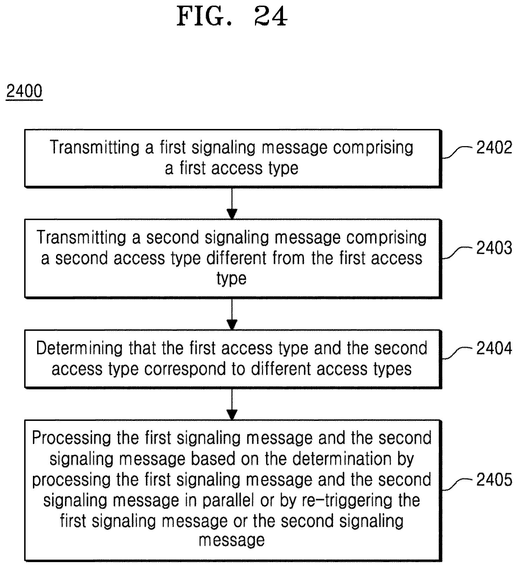

Figure 24 illustrates an example process flow depicting a method 2400 for handling collisions of signaling messages, according to embodiments of the present disclosure.

At step 2402, the method 2400 may include transmitting a first signaling message, wherein the first signaling message is associated with a first access type from among a plurality of access types. At step 2403, the method 2400 may include transmitting a second signaling message and the second signaling message is associated with a second access type from among a plurality of access types. The UE 901 is registered for the first access type and the second access type. In an embodiment, the first access type may be one of 3GPP access type or non-3GPP access type, and the second access type may be the other of the 3GPP access type or non-3GPP access type. In some cases, the method 2400 may include detecting, by the network entity 905, that the first access type received in the de-registration request from the UE 901 is different from the second access type transmitted in the de-registration request to the UE 901 where processing the first signalling message and the second signalling message comprises re-triggering the de-registration request with the second access type as the second signaling message.

According to an embodiment, the method 2400 may include detecting, by the UE 901, that the first access type is different from the second access type. Further, processing the first signalling message and the second signalling message may include processing the deregistration request and the emergency PDU session establishment request to the network entity in parallel.

According to an embodiment, the method 2400 may include transmitting, by the UE 901 to the network entity 905, a de-registration request with the first access type as the first signaling message. The method 2400 may also include transmitting, by the UE 901 to the network entity 905, an emergency packet data unit (PDU) session establishment request over the second access type as the second signaling message. Moreover, the method 2400 may include storing, by the UE 901, information associated with the first access type and the second access type. Furthermore, the method 2400 may include detecting, by the UE 901, that the first access type does not match with the second access type and parallelly processing the deregistration request and the emergency PDU session establishment request.

At step 2404, the method 2400 may include determining that the first access type and the second access type relate to a different access type from among the multiple (or plurality of) access types.

Next, at step 2405, the method 2400 may include processing the first signaling message and the second signaling message by performing one of: parallelly processing of the first signaling message and the second signaling message; or re-triggering one or more of the first signaling message or the second signaling message.

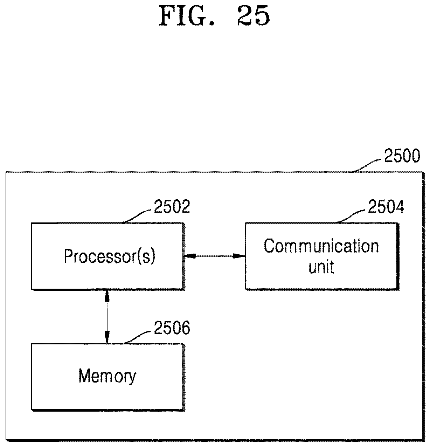

Figure 25 illustrates an example of a network 2500 (e.g., a network entity 105, 905), according to embodiments of the present disclosure. The network 2500 may correspond to 5GMM, as discussed in the present disclosure. The network 2500 may include at least one processor 2502 (generally referred to herein as the processor 2502), a memory unit 2506 (e.g., memory, storage, etc.), and/or a communication unit 2504 (e.g., communicator or communication interface). Further, the network 2500 may also include the Cloud -RAN (C-RAN), a Central Unit (CU), a core Network (NW), a Distributed Unit (DU) or the any other possible network (NW) entity. The communication unit 2504 may perform one or more functions for transmitting and receiving signals via a wireless channel.

As an example, the processor 2502 may be a single processing unit or a number of units, each of which could include multiple computing units. The processor 2502 may be implemented as one or more microprocessors, microcomputers, microcontrollers, digital signal processors, central processing units, state machines, logic circuitries, and/or any devices that manipulate signals based on operational instructions. Among other capabilities, the processor 2502 is configured to fetch and execute computer-readable instructions and data stored in the memory. The processor 2502 may include one or a plurality of processors. At this time, one or a plurality of processors 2502 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a more processors 2502 may control the processing of the input data in accordance with a predefined (or alternatively, given) operating rule or artificial intelligence (AI) model stored in the non-volatile memory and the volatile memory, e.g., memory unit 2506. The predefined (or alternatively, given) operating rule or artificial intelligence model is provided via training or learning.

The memory 2506 may include any non-transitory computer-readable medium known in the art including, for example, volatile memory, such as Static Random Access Memory (SRAM) and Dynamic Random Access Memory (DRAM), and/or non-volatile memory, such as Read-Only Memory (ROM), erasable programmable ROM, flash memories, hard disks, optical disks, and/or magnetic tapes.

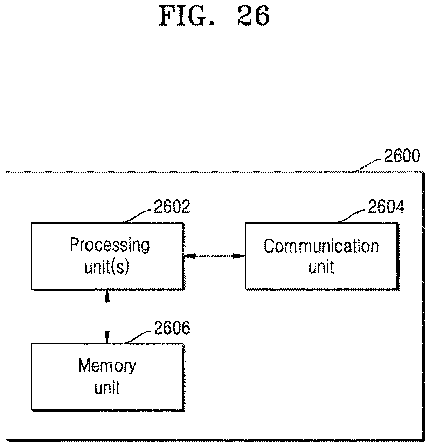

Figure 26 illustrates a configuration of a UE 2600 in a wireless communication system, according to embodiments of the present disclosure. The configuration of Figure 26 may be understood as a part of the configuration of the UE 2600. Further, the method as disclosed herein may be implemented in the UE 2600. According to an embodiment, the UE 2600 corresponds to the UE 101 and/or the UE 901. Herein, it is understood that terms including "unit" or "module" at the end may refer to the unit for processing at least one function or operation and may be implemented in hardware, software, or a combination of hardware and software.

Referring to Figure 26, the UE 2600 may include at least one processor 2602 (generally referred to herein as the processor 2602), a communication unit 2604 (e.g., communicator or communication interface), and/or a memory unit 2606 (e.g., a memory). By way of example, the UE 2600 may be a User Equipment, such as a cellular phone or other device that communicates over a plurality of cellular networks (such as a 3G, 4G, a 5G or pre-5G, 6G network or any future wireless communication network). The communication unit 2604 may perform functions for transmitting and receiving signals via a wireless channel.

As an example, the processor 2602 may be a single processing unit or a number of units, each of which could include multiple computing units. The processor 2602 may be implemented as one or more microprocessors, microcomputers, microcontrollers, digital signal processors, central processing units, state machines, logic circuitries, and/or any devices that manipulate signals based on operational instructions. Among other capabilities, the processor 2602 is configured to fetch and execute computer-readable instructions and data stored in the memory. The processor 2602 may include one or a plurality of processors. At this time, one or more processors 2602 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or more processors 2602 may control the processing of the input data in accordance with a predefined (or alternatively, given) operating rule or artificial intelligence (AI) model stored in the non-volatile memory and the volatile memory, e.g., memory unit 2606. The predefined (or alternatively, given) operating rule or artificial intelligence model is provided through training or learning.

The memory unit 2606 may include any non-transitory computer-readable medium known in the art including, for example, volatile memory, such as Static Random Access Memory (SRAM) and Dynamic Random Access Memory (DRAM), and/or non-volatile memory, such as Read-Only Memory (ROM), erasable programmable ROM, flash memories, hard disks, optical disks, and magnetic tapes.

The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed herein. For example, the operations of methods described above may be performed by various hardware and/or software implemented in some form of hardware (e.g., processor, ASIC, etc.).

The software may comprise an ordered listing of executable instructions for implementing logical functions and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 2506 and/or the memory 2606). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments disclosed herein may be implemented using processing circuitry. For example, embodiments disclosed herein may be implemented using at least one software program running on at least one hardware device and performing network management functions to control the elements.

While specific language has been used to describe the disclosure, any limitations arising on account of the same are not intended. As would be apparent to a person in the art, various working modifications may be made to the method in order to implement the inventive concepts as taught herein.

The drawings and the forgoing description give examples of embodiments. Those skilled in the art will appreciate that one or more of the described elements may well be combined into a single functional element. Alternatively, certain elements may be split into multiple functional elements. Elements from one example may be added to another example. For example, orders of processes described herein may be changed and are not limited to the manner described herein.

Moreover, the actions of any flow diagram need not be implemented in the order shown; nor do all of the steps necessarily need to be performed. Also, those steps that are not dependent on other steps may be performed in parallel with the other steps. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to challenges have been described above with regard to specific examples. However, the benefits, advantages, solutions to challenges, and any component(s) that may cause any benefit, advantage, or solution to occur or become more pronounced are not to be construed as a critical, required, or essential feature or component of any or all the claims.

## Claims

1. A method for handling collision of signaling messages between a user equipment, UE, and a network entity, the method comprising:
transmitting a first signaling message comprising a first access type;
receiving a second signaling message comprising a second access type different from the first access type, wherein the UE is registered on a network for the first access type and the second access type;
determining that the first access type and the second access type correspond to different access types; and
processing the first signaling message and the second signaling message based on the determination by processing the first signaling message and the second signaling message in parallel or by re-triggering the first signaling message or the second signaling message.

2. The method of claim 1,
wherein the first access type is one of a 3GPP access type or a non-3GPP access type, and wherein the second access type is the other of the 3GPP access type or the non-3GPP access type,
wherein the first signaling message comprises a first de-registration request transmitted by the UE to the network entity during a switch off procedure,
wherein the second signaling message comprises a second de-registration request transmitted by the network entity to the UE,
wherein the network entity detects that the first access type in the first de-registration request is different from the second access type in the second de-registration request, and
wherein the processing the first signaling message and the second signaling message comprises re-triggering the de-registration request with the second access type.

3. The method of claim 1, wherein:
the first signaling message comprises a first de-registration request transmitted by the UE to the network entity during a non-switch off procedure;
the second signaling message comprises a second de-registration request transmitted by the network entity to the UE that indicates that re-registration is required over the second access type;
the UE detects that the first access type in the first de-registration request is different from the second access type in the second de-registration request; and
processing the first signaling message and the second signaling message comprises processing the de-registration request from the network entity to trigger re-registration of the UE with the network entity over the second access type.

4. The method of claim 1, wherein:
a same packet data unit, PDU, session is established over the first access type and the second access type,
the first signaling message comprises a PDU modification request for the PDU session transmitted by the UE to the network entity;
the second signaling message comprises a PDU release command message for the PDU session transmitted by the network entity to the UE; and
the UE stores information associated with the first access type and the second access type; and
processing the first signaling message and the second signaling message comprises detecting that the PDU is released for the second access type and the PDU is active on the first access type and processing the PDU modification request and the PDU release command message in parallel.

5. The method of claim 1, wherein:
the UE is registered for the first access type and the second access type,
the first signaling message comprises a de-registration request transmitted by the UE to the network entity;
the second signaling message comprises network-initiated messages transmitted by the network entity to the UE; and
the UE compares the second access type in the network-initiated message with the first access type in the de-registration request; and
processing the first signaling message and the second signaling message comprises detecting that the first access type does not match with the second access type and processing the de-registration request and the network-initiated messages in parallel, wherein the network-initiated message is processed over the second access type.

6. The method of claim 5, wherein the network-initiated message is one of a 5GMM common procedures comprising at least one of a Downlink Non-Access Stratum transport message, a generic UE configuration update command, an Identity Request, an Authentication Request, or a Notification procedure.

7. A system for handling collision of signaling messages, the system comprising:
a user equipment, UE; and
a network entity of a network in communication with the UE, wherein the system is configured to:
transmit a first signaling message and a second signaling message, wherein the first signaling message is associated with a first access type and the second signaling message is associated with a second access type, wherein the UE is registered on the network for the first access type and the second access type;
determine that the first access type is different from the second access type; and
process the first signaling message and the second signaling message based on the determination by processing the first signaling message and the second signaling message in parallel or by re-triggering the first signaling message or the second signaling message.

8. The system as claimed in claim 7,
wherein the first access type is one of a 3GPP access type or a non-3GPP access type, and wherein the second access type is the other of the 3GPP access type or the non-3GPP access type,
wherein the first signaling message comprises a first de-registration request transmitted by the UE to the network entity during a switch-off procedure,
wherein the second signaling message comprises a second de-registration request transmitted by the network entity to the UE,
wherein the network entity detects that the first access type in the first de-registration request is different from the second access type in the second de-registration request, and
wherein the processing the first signaling message and the second signaling message comprises re-triggering the de-registration request with the second access type.

9. The system of claim 7, wherein:
the first signaling message comprises a first de-registration request transmitted by the UE to the network entity during a non switch-off procedure;
the second signaling message comprises a second de-registration request transmitted by the network entity to the UE that indicates that re-registration is required over the second access type;
the UE detects that the first access type in the first de-registration request is different from the second access type in the second de-registration request; and
the system further comprises a processing unit configured to process the first signaling message and the second signaling message based on processing the de-registration request from the network entity to trigger re-registration of the UE with the network entity over the second access type.

10. The system of claim 7, wherein:
the first signaling message comprises a de-registration request transmitted by the UE to the network entity;
the second signaling message comprises an emergency packet data unit, PDU, session establishment request transmitted by the UE to the network entity; and
the UE stores information associated with the first access type and the second access type; and
the system further comprises a processing unit configured to process the first signaling message and the second signaling message based on detecting that the first access type does not match with the second access type and processing the de-registration request and the emergency PDU session establishment request in parallel.

11. The system as claimed in claim 7, wherein:
a same packet data unit, PDU, session is established over the first access type and the second access type,
the first signaling message comprises a PDU modification request for the PDU session transmitted by the UE to the network entity;
the second signaling message comprises a PDU release command message for the PDU session transmitted by the network entity to the UE; and
the UE stores information associated with the first access type and the second access type; and
the system further comprises a processing unit configured to process the first signaling message and the second signaling message based on detecting that the PDU is released for the second access type and the PDU is active on the first access type and processing the PDU modification request and the PDU release command message in parallel.

12. The system of claim 7, wherein:
the UE is registered for the first access type and the second access type,
the first signaling message comprises a de-registration request transmitted by the UE to the network entity;
the second signaling message comprises network-initiated messages transmitted by the network entity to the UE; and
the UE compares the second access type in the network-initiated message with the first access type in the de-registration request; and
the system further comprises a processing unit configured to process the first signaling message and the second signaling message based on detecting that the first access type does not match with the second access type and processing the de-registration request and the network-initiated message in parallel, wherein the network-initiated messages is processed over the second access type.

13. The system as claimed in claim 12, wherein the network-initiated message is one of a 5GMM common procedures comprising at least one of a Downlink Non-Access Stratum transport message, a generic UE configuration update command, an Identity Request, an Authentication Request, or a Notification procedure.

14. A method for handling collision of signaling messages between a user equipment, UE, and a network entity, the method comprising:
transmitting a first signaling message comprising a first access type;
transmitting a second signaling message comprising a second access type different from the first access type, wherein the UE is registered on a network for the first access type and the second access type;
determining that the first access type and the second access type correspond to different access types; and
processing the first signaling message and the second signaling message based on the determination by processing the first signaling message and the second signaling message in parallel or by re-triggering the first signaling message or the second signaling message.

15. The method of claim 14, wherein:
the first signaling message comprises a de-registration request transmitted by the UE to the network entity;
the second signaling message comprises an emergency packet data unit, PDU, session establishment request transmitted by the UE to the network entity; and
the UE stores information associated with the first access type and the second access type; and
processing the first signaling message and the second signaling message comprises detecting that the first access type does not match with the second access type and processing the de-registration request and the emergency PDU session establishment request in parallel.
